# EUROPEAN PATENT APPLICATION

(11) **EP 4 368 488 A1**
(43) Date of publication of application: **15.05.2024**
(21) Application number: 22837317.1
(22) Date of filing: 18.04.2022
(51) Int. Cl.: B63B 11/04, B63B 25/16, B63J 2/06, B63J 2/08, B63J 2/10, B63H 21/38

(54) **FLOATING BODY**

(30) Priority: 08.07.2021 JP 2021113523
(71) Applicant: Mitsubishi Shipbuilding Co., Ltd., Yokohama-shi Kanagawa 220-8401 (JP)
(72) Inventor: YAMADA Daisuke, Yokohama-shi, Kanagawa 220-8401 (JP); SAKURAI Hideaki, Tokyo 100-8332 (JP)
(74) Representative: Studio Torta S.p.A.
(86) International application number: PCT/JP2022/018012
(87) International publication number: WO 2023/281896

(57) **Abstract**

This floating body comprises: a floating body main body; a compartment for accommodating an ammonia-related device in the inside thereof, the compartment being provided in the floating body main body; a duct for communicating the inside of the compartment and the outside of the compartment, the duct being connected to the compartment; an exhaust fan for discharging air from inside the compartment to outside the compartment via the duct; an absorbent liquid supply line for supplying an absorbent liquid capable of absorbing ammonia; an ammonia removal unit that is disposed outside of the compartment and is capable of causing ammonia that is included in air discharged by the exhaust fan via the duct to be removed by being absorbed by the absorbent liquid supplied by the absorbent liquid supply line; and an absorbent liquid discharge line for discharging at least the absorbent liquid that has absorbed the ammonia in the ammonia removal unit into water on the periphery of where the floating body main body floats.

## Description

### Technical Field

The present disclosure relates to a floating structure.

The present application claims priority based on Japanese Patent Application No. 2021-113523 filed in Japan on July 08, 2021, the contents of which are incorporated herein by reference.

### Background Art

The international momentum regarding decarbonized fuel is increasing, and the introduction of an ammonia co-firing boiler at a coal-fired power plant is being considered. In a floating structure, it is also being considered to use ammonia as fuel for a main engine.

For example, when ammonia as fuel for a power plant is transported or when ammonia is used as fuel for a main engine, there is a possibility that leakage of ammonia occurs in a compartment such as equipment chamber accommodating equipment that handles ammonia. When such leakage of ammonia occurs, it is assumed that the leaked ammonia is vaporized and leaks to the outside of the compartment. On the other hand, in the case of the above-described equipment chamber, there is a possibility that the equipment accommodated in the equipment chamber is flooded when an attempt is made to remove ammonia by sprinkling water.

In PTL 1, by providing a sealed duct that communicates with the inside of the compartment, spraying water inside the duct, and letting the water absorb ammonia in the duct to create negative pressure inside the compartment, the leakage of ammonia to the outside of the compartment is prevented.

### Citation List

### Patent Literature

[PTL 1] Japanese Patent Application No. 4356939

### Summary of Invention

### Technical Problem

In the ammonia removal method described in PTL 1, although leakage of ammonia to the outside of the compartment is prevented, ammonia remains inside the compartment. Therefore, when a worker enters the compartment where the ammonia has leaked, the worker may be in contact with the ammonia leaked inside the compartment.

The present disclosure has been made to solve the above problems, and an object of the present disclosure is to provide a floating structure capable of preventing a worker from coming into contact with ammonia without flooding equipment in a compartment.

### Solution to Problem

The following configurations are adopted to solve the above problem.

A floating structure according to the present disclosure includes: a floating main structure; a compartment that is provided in the floating main structure and that accommodates ammonia-related equipment inside the compartment; a duct that is connected to the compartment and that makes an inside of the compartment and an outside of the compartment communicate with each other; an exhaust fan that discharges air at the inside of the compartment to the outside of the compartment via the duct; an absorbing liquid supply line that supplies absorbing liquid capable of absorbing ammonia; an ammonia removal portion that is disposed on the outside of the compartment and that is capable of removing ammonia, which is contained in air discharged by the exhaust fan via the duct, by absorbing the ammonia with the absorbing liquid supplied through the absorbing liquid supply line; and an absorbing liquid release line that releases at least the absorbing liquid, which has absorbed the ammonia in the ammonia removal portion, into water around which the floating main structure floats.

### Advantageous Effects of Invention

According to the floating structure of the above aspect, it is possible to prevent a worker from coming into contact with ammonia without flooding equipment in a compartment.

### Brief Description of Drawings

Fig. 1 is a side view of a floating structure according to a first embodiment of the present disclosure.
Fig. 2 is a diagram showing a schematic configuration of an ammonia removal system in the first embodiment of the present disclosure.
Fig. 3 is a block diagram showing a schematic configuration of a control device in the first embodiment of the present disclosure.
Fig. 4 is a functional block diagram of the control device described above.
Fig. 5 is a flowchart of ammonia removal processing in the first embodiment of the present disclosure.
Fig. 6 is a diagram corresponding to Fig. 2 in a second embodiment of the present disclosure.
Fig. 7 is a functional block diagram of the control device described above.
Fig. 8 is a diagram corresponding to Fig. 2 in a third embodiment of the present disclosure.
Fig. 9 is a functional block diagram of the control device described above.
Fig. 10 is a flowchart of ammonia removal processing in an embodiment of the present disclosure.
Fig. 11 is a diagram corresponding to Fig. 2 in a fourth embodiment of the present disclosure.
Fig. 12 is a functional block diagram of the control device described above.
Fig. 13 is a flowchart of the ammonia removal processing in the first embodiment of the present disclosure.
Fig. 14 is a diagram corresponding to Fig. 2 in a first modification example of each embodiment of the present disclosure.
Fig. 15 is an enlarged view of a scrubber in a second modification example of each embodiment of the present disclosure.

### Description of Embodiments

### [First Embodiment]

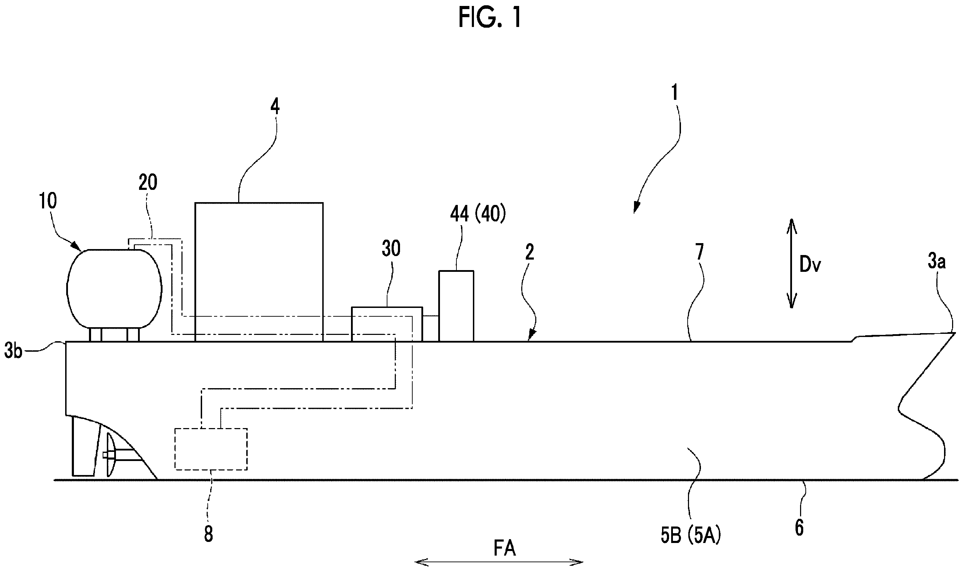

Hereinafter, a floating structure according to a first embodiment of the present disclosure will be described with reference to the drawings. Fig. 1 is a side view of the floating structure according to the first embodiment of the present disclosure.

### (Configuration of Floating Structure)

As shown in Fig. 1, the floating structure 1 of the present embodiment includes a floating main structure 2, a superstructure 4, combustion equipment 8, an ammonia tank 10, a pipe system 20, a compartment 30, and an ammonia removal system 40. The floating structure 1 of the present embodiment will be described as an example of a ship that can be navigated by a main engine or the like. The ship type of the floating structure 1 is not limited to a specific ship type. As the ship type of the floating structure 1, for example, a liquefied gas carrier, a ferry, a RORO ship, a vehicle carrier, a passenger ship, or the like can be exemplified.

The floating main structure 2 includes a pair of ship sides 5A and 5B and a ship bottom 6 that form an outer shell of the floating main structure 2. The ship sides 5A and 5B include a pair of ship side outer plates that form left and right ship sides. The ship bottom 6 includes a ship bottom outer plate that connects the ship sides 5A and 5B. The outer shell of the floating main structure 2 is formed in a U shape in a cross section orthogonal to a bow-stern direction FA by the pair of ship sides 5A and 5B and the ship bottom 6.

The floating main structure 2 further includes an upper deck 7 which is a through deck which is disposed in the uppermost layer. The superstructure 4 is formed on the upper deck 7. An accommodation space and the like are provided in the superstructure 4. In the floating structure 1 of the present embodiment, for example, a cargo space (not shown) for loading cargo is provided on a bow 3a side of the superstructure 4 in the bow-stern direction FA.

The combustion equipment 8 is equipment that generates heat energy by burning fuel and is provided inside the floating main structure 2. Examples of the combustion equipment 8 include an internal combustion engine used as a main engine for propelling the floating structure 1, an internal combustion engine used in a power generation facility that supplies electricity to the inside of a ship, a boiler that generates steam as working fluid, and the like. The combustion equipment 8 of the present embodiment uses ammonia (hereinafter, referred to as fuel ammonia) as fuel.

The ammonia tank 10 stores liquefied ammonia as fuel ammonia. The ammonia tank 10 is installed on the upper deck 7 on a stern 3b side of the superstructure 4. The disposition of the ammonia tank 10 is an example and is not limited to the upper deck 7 on the stern 3b side of the superstructure 4.

The pipe system 20 connects the combustion equipment 8 and the ammonia tank 10.

The compartment 30 is a compartment that accommodates ammonia-related equipment. The compartment 30 in the present embodiment is provided on the upper deck 7 on the bow 3a side of the superstructure 4. The pipe system 20 described above connects the combustion equipment 8 and the ammonia tank 10 via the inside of the compartment 30. Here, the ammonia-related equipment means all equipment that handles ammonia, and examples thereof include ammonia fuel equipment that handles the fuel ammonia and ammonia cargo equipment that handles ammonia as cargo. In the following description, although the compartment 30 in which the ammonia fuel equipment is accommodated will be described, the compartment 30 in which the ammonia cargo equipment is accommodated may be used.

The compartment 30 of the present embodiment is a fuel supply equipment chamber and accommodates ammonia fuel equipment that constitutes a part of the pipe system 20. Examples of the ammonia fuel equipment accommodated in the fuel supply equipment chamber include a pump that pumps ammonia from the ammonia tank 10 to the combustion equipment 8, a heater for heating the ammonia sent to the combustion equipment 8, an electric valve, and the like. The compartment 30 which accommodates the ammonia fuel equipment is not limited to the ammonia fuel supply equipment chamber. The compartment 30 that accommodates the ammonia fuel equipment may be, for example, an ammonia fuel pressure regulation valve chamber, an ammonia fuel intake chamber (in other words, a bunker station), or the like.

### (Configuration of Ammonia Removal System)

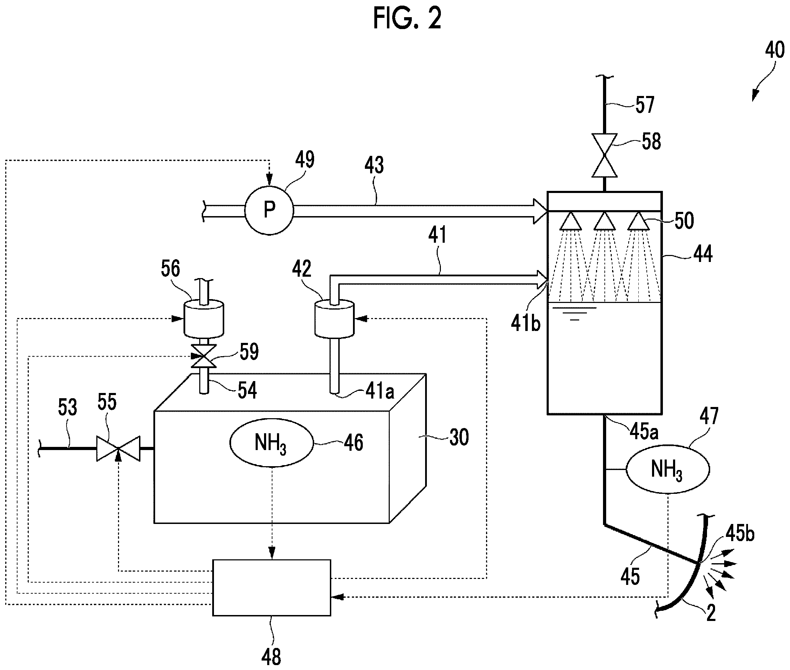

Fig. 2 is a diagram showing a schematic configuration of the ammonia removal system in the first embodiment of the present disclosure.

As shown in Fig. 2, the ammonia removal system 40 of the present embodiment includes a duct 41, an exhaust fan 42, an absorbing liquid supply line 43, a scrubber (ammonia removal portion) 44, an absorbing liquid release line 45, an in-compartment sensor 46, a release line sensor 47, and a control device 48.

The duct 41 is connected to the compartment 30. The duct 41 makes the inside of the compartment 30 and the outside of the compartment 30 communicate with each other. The duct 41 of the present embodiment includes a first end portion 41a connected to the compartment 30 and a second end portion 41b connected to a scrubber 44 and makes an internal space of the compartment 30 and an internal space of the scrubber 44 communicate with each other. That is, the duct 41 forms a flow path that guides the air inside the compartment 30, which has flowed in from the first end portion 41a, into the scrubber 44 through the second end portion 41b. The duct 41 of the present embodiment is configured such that the air does not flow out from other than the first end portion 41a and the second end portion 41b.

The exhaust fan 42 discharges the air at the inside of the compartment 30 to the outside of the compartment 30 via the duct 41. The exhaust fan 42 of the present embodiment discharges the air at the inside of the compartment 30 to the scrubber 44 located outside the compartment 30 by blowing the air from the first end portion 41a toward the second end portion 41b of the duct 41. The exhaust fan 42 is provided in the duct 41. The exhaust fan 42 of the present embodiment is a variable speed fan capable of regulating an air volume and is controlled by a control device 48 described later. Although the case where the exhaust fan 42 in the present embodiment is provided in the duct 41 near the first end portion 41a is exemplified, the disposition of the exhaust fan 42 is not limited to the above disposition.

The absorbing liquid supply line 43 supplies absorbing liquid capable of absorbing the ammonia. Examples of the absorbing liquid include seawater, fresh water, and those obtained by treating the seawater and fresh water so as to be acidic. The absorbing liquid supply line 43 includes a pump 49 for pumping the absorbing liquid. The absorbing liquid supply line 43 of the present embodiment supplies water (for example, seawater) around which the floating main structure 2 floats as the absorbing liquid.

The scrubber 44 is disposed on the outside of the compartment 30. In the present embodiment, a case is shown in which the scrubber 44 is disposed in the vicinity of the compartment 30. The scrubber 44 is configured to be capable of removing the ammonia, which is contained in the air discharged by the exhaust fan 42 via the duct 41, by absorbing the ammonia with the absorbing liquid supplied through the absorbing liquid supply line 43. That is, when the vaporized ammonia is contained in the air inside the compartment 30, the scrubber 44 removes the ammonia from the air containing the ammonia sent through the duct 41.

The scrubber 44 includes a nozzle portion 50 that sprays the absorbing liquid. The nozzle portion 50 is disposed in an upper portion of the internal space of the scrubber 44. The absorbing liquid, which is sprayed from the nozzle portion 50, is in contact with the air supplied to the scrubber 44 via the duct 41 while moving downward due to its own weight. Due to the contact, the ammonia contained in the air is absorbed in the absorbing liquid and stored in the lower portion of the scrubber 44.

Here, the second end portion 41b of the duct 41 described above is connected to the scrubber 44 at the lower side of the nozzle portion 50. A position of the second end portion 41b in the vertical direction may be located at the lower side of a liquid level of the absorbing liquid stored in the lower portion of the internal space. By connecting the second end portion 41b to such a position, the air flowing from the duct 41 into the scrubber 44 is released as bubbles into the stored absorbing liquid. Therefore, the ammonia contained in the air is absorbed in the absorbing liquid stored in the lower portion of the internal space of the scrubber 44. When the air bubbles, which are released into the absorbing liquid, move upward, reach the liquid level, and are released with the gas phase, the air bubbles come into contact with the absorbing liquid sprayed by the nozzle portion 50, and the remaining ammonia that is contained in the air is absorbed.

The absorbing liquid release line 45 releases the absorbing liquid, which has absorbed ammonia in the scrubber 44, into the water around which the floating main structure 2 floats. The absorbing liquid release line 45 in the present embodiment includes a first end portion 45a connected to the scrubber 44 and a second end portion 45b connected to the ship sides 5A and 5B or the ship bottom 6 at the lower side of a light draft line of the floating main structure 2. The first end portion 45a of the absorbing liquid release line 45 is connected to the lowermost side of the scrubber 44. The internal pressure of the scrubber 44 in the present embodiment is increased by air blast of the exhaust fan 42. Therefore, in the present embodiment, by using this pressure, the absorbing liquid, which has absorbed the ammonia stored in the lower portion of the scrubber 44, is released into the water outside the floating main structure 2 via the absorbing liquid release line 45. Here, what is released into the water outside the floating main structure 2 via the absorbing liquid release line 45 is not limited to the absorbing liquid stored in the lower portion of the scrubber 44. For example, together with the absorbing liquid inside the scrubber 44, the air inside the scrubber 44 is also released into the water outside the floating main structure 2 via the absorbing liquid release line 45.

The scrubber 44 of the present embodiment includes an atmosphere release line 57 and an opening-closing damper 58. The atmosphere release line 57 is configured to be connected to, for example, a vent pipe (not shown) or the like provided in the floating main structure 2 and to be capable of releasing the air, which has flowed into the inside of the scrubber 44 via the duct 41, to the atmosphere. The opening-closing damper 58 opens and closes the atmosphere release line 57. The opening-closing damper 58 of the scrubber 44 in the first embodiment is closed at all times. The opening-closing damper 58 can be opened, for example, when the ventilation exhaust fan 56, which will be described later, cannot be used due to maintenance or the like. In this way, when the ventilation exhaust fan 56 cannot be used, the compartment 30 can be ventilated by using the atmosphere release line 57 instead of the ventilation exhaust duct 54.

The in-compartment sensor 46 detects ammonia (specifically, the concentration of ammonia) contained in the air at the inside of the compartment 30. The in-compartment sensor 46 of the present embodiment outputs information on the detection result to the control device 48.

The release line sensor 47 detects ammonia (specifically, the concentration of ammonia) contained in fluid flowing through the absorbing liquid release line 45. The release line sensor 47 of the present embodiment outputs the information on the detection result to the control device 48 in the same manner as the in-compartment sensor 46. In order to notify the worker of the concentration of the detected ammonia, a display device such as a display that displays the detection result of the in-compartment sensor 46 and the detection result of the release line sensor 47 may be provided.

Here, as shown in Fig. 2, a ventilation air supply duct 53 and a ventilation exhaust duct 54 for ventilating inside the compartment 30 are connected to the compartment 30 of the first embodiment described above. Further, a ventilation air supply damper 55 is attached to the ventilation air supply duct 53, and a ventilation exhaust fan 56 and a ventilation exhaust damper 59 are attached to the ventilation exhaust duct 54. Both the ventilation air supply duct 53 and the ventilation exhaust duct 54 make the inside of the compartment 30 and the outside of the floating main structure 2 communicate with each other. The ventilation air supply damper 55 regulates the flow rate of the air flowing inside the ventilation air supply duct 53. The ventilation air supply duct 53 in the present embodiment is controlled by the control device 48. The ventilation exhaust fan 56 sends out the air, which is inside the compartment 30, via the ventilation exhaust duct 54 and the ventilation exhaust damper 59. The ventilation exhaust damper 59 regulates a flow rate of fluid (gas) flowing through the ventilation exhaust duct 54. The ventilation air supply duct 53 of the present embodiment may be disposed on the opposite side (in other words, a vertically symmetrical position) of a lower portion of the compartment 30 with respect to a position of the first end portion 41a of the duct 41 connected to a ceiling of the compartment 30. As a result, the air inside the compartment 30 can be efficiently discharged from the duct 41 to the outside of the compartment 30. When the flow of the air in the ventilation exhaust duct 54 cannot be stopped simply by stopping the ventilation exhaust fan 56, a ventilation exhaust damper (not shown) for opening and closing the ventilation exhaust duct 54 may be provided to close the ventilation exhaust duct 54 when the ventilation exhaust fan 56 is stopped.

### (Configuration of Control Device)

The control device 48 controls the ammonia removal system 40. More specifically, the control device 48 determines whether or not the leakage of the ammonia has occurred, based on the detection result of the in-compartment sensor 46. Based on this determination, when the determination is made that the leakage of the ammonia has occurred, the control device 48 operates the exhaust fan 42. On the other hand, when the determination is made that the leakage of the ammonia has not occurred, the control device 48 sets the exhaust fan 42 in a stop state. Further, when the determination is made that the leakage of the ammonia has occurred inside the compartment 30 based on the detection result of the in-compartment sensor 46, the control device 48 operates the exhaust fan 42 and regulates the air volume of the exhaust fan 42 based on the detection result of the release line sensor 47. Further, the control device 48 of the present embodiment sets the pump 49 in a stop state to stop supplying the absorbing liquid through the absorbing liquid supply line 43 when the determination is made that the leakage of the ammonia has not occurred inside the compartment 30, and drives the pump 49 to supply the absorbing liquid to the scrubber 44 through the absorbing liquid supply line 43 when the determination is made that the leakage of the ammonia has occurred inside the compartment 30.

### (Hardware Configuration Diagram of Control Device)

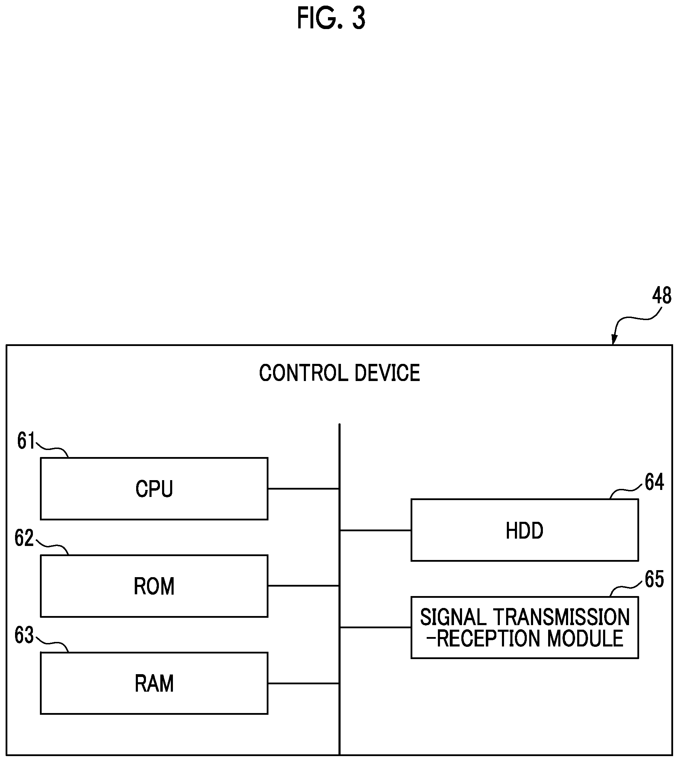

Fig. 3 is a block diagram showing a schematic configuration of the control device in the first embodiment of the present disclosure.

As shown in Fig. 3, the control device 48 is a computer including a central processing unit (CPU) 61, a read only memory (ROM) 62, a random access memory (RAM) 63, a hard disk drive (HDD) 64, and a signal transmission-reception module 65. The signal transmission-reception module 65 receives detection signals of the in-compartment sensor 46 and the release line sensor 47. Further, the signal transmission-reception module 65 transmits a control signal for controlling the exhaust fan 42, the pump 49, and the like.

### (Functional Block Diagram of Control Device)

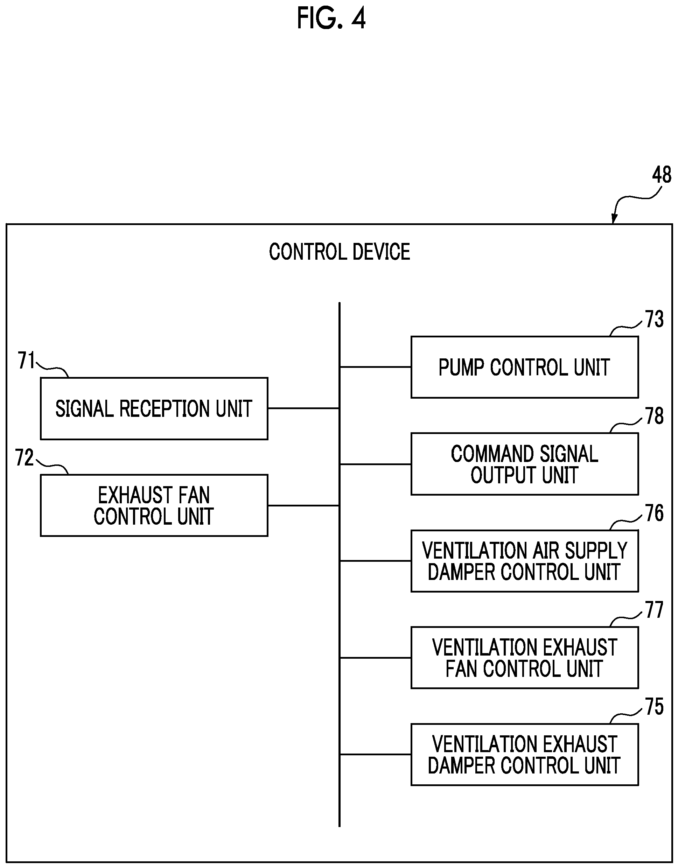

Fig. 4 is a functional block diagram of the control device described above.

By the CPU 61 of the control device 48 executing a program stored in advance in the HDD 64, ROM 62, or the like, each functional configuration of a signal reception unit 71, an exhaust fan control unit 72, a pump control unit 73, a ventilation exhaust damper control unit 75, a ventilation air supply damper control unit 76, a ventilation exhaust fan control unit 77, and a command signal output unit 78 is implemented.

The signal reception unit 71 receives the detection signals from the in-compartment sensor 46 and the release line sensor 47 via the signal transmission-reception module 65.

The exhaust fan control unit 72 controls the operation, stop, and air volume of the exhaust fan 42 based on the detection signal of the in-compartment sensor 46 and the detection signal of the release line sensor 47 received by the signal reception unit 71.

The pump control unit 73 controls the operation and stop of the pump 49 based on the detection signal of one or both of the in-compartment sensor 46 and the release line sensor 47. The pump 49 may be stopped manually by the worker.

The ventilation air supply damper control unit 76 controls an opening degree of the ventilation air supply damper 55 based on the detection signal of the in-compartment sensor 46. Specifically, the ventilation air supply damper control unit 76 controls the opening degree of the ventilation air supply damper 55 such that the inside of the compartment 30 is maintained at negative pressure when the determination is made that the leakage of the ammonia has occurred inside the compartment 30.

The ventilation exhaust fan control unit 77 controls the operation and stop of the ventilation exhaust fan 56 based on the detection signal of the in-compartment sensor 46. The ventilation exhaust damper control unit 75 controls an opening degree (for example, opening-closing) of the ventilation exhaust damper 59 based on the detection signal of the in-compartment sensor 46.

The command signal output unit 78 outputs command signals to each of the exhaust fan 42, the pump 49, the ventilation air supply damper 55, and the ventilation exhaust fan 56 in order to implement each control by the exhaust fan control unit 72, the pump control unit 73, the ventilation exhaust damper control unit 75, the ventilation air supply damper control unit 76, and the ventilation exhaust fan control unit 77.

### (Operation of Control Device)

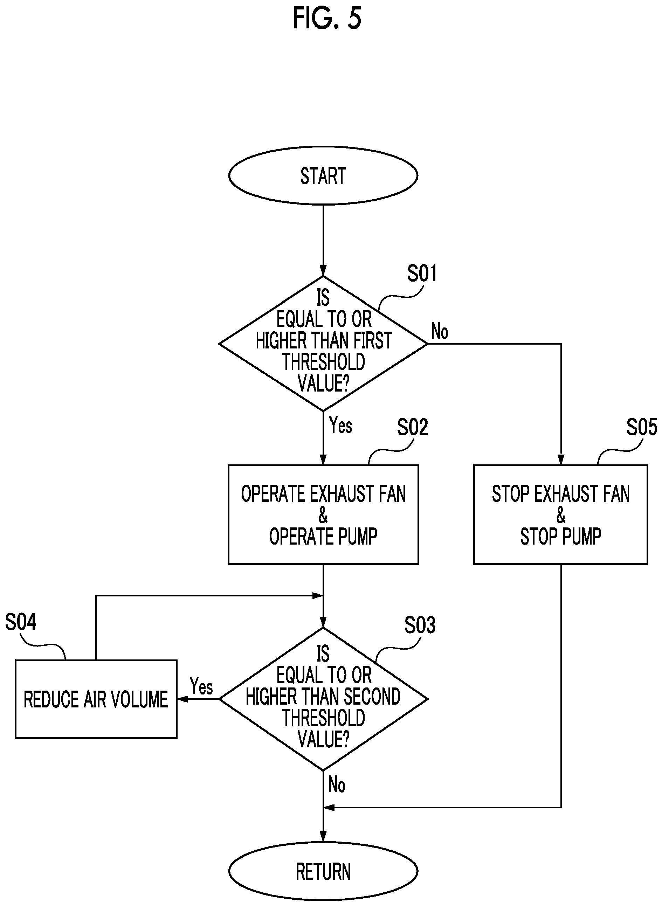

Fig. 5 is a flowchart of ammonia removal processing in the first embodiment of the present disclosure.

Next, the operation of the control device 48 when removing the ammonia inside the compartment 30 of the floating structure 1 described above will be described with reference to the flowchart in Fig. 5.

First, the exhaust fan control unit 72 and the pump control unit 73 of the control device 48 determine whether or not a concentration of ammonia inside the compartment 30 is equal to or higher than a predetermined first threshold value based on the detection result of the in-compartment sensor 46 (step S01). When the determination is made that the concentration of ammonia inside the compartment 30 is not equal to or higher than the first threshold value, since there is no leakage of ammonia inside the compartment 30, the exhaust fan 42 and the pump 49 are set in a stop state (step S05). On the other hand, when the determination is made that the concentration of ammonia inside the compartment 30 is equal to or higher than the first threshold value, since the leakage of the ammonia has occurred inside the compartment 30, the exhaust fan control unit 72 starts operating the exhaust fan 42, and the pump control unit 73 starts operating the pump 49 (step S02) . As a result, the air inside the compartment 30 and the absorbing liquid are respectively supplied to the scrubber 44, and the ammonia inside the air is absorbed by the absorbing liquid. In the present embodiment, when the determination is made that the concentration of ammonia inside the compartment 30 is equal to or higher than the first threshold value, the ventilation exhaust fan 56 is set in a stop state, the ventilation exhaust damper 59 is closed, and the opening degree of the ventilation air supply damper 55 is regulated such that the inside of the compartment 30 is maintained at predetermined negative pressure.

Next, the exhaust fan control unit 72 of the control device 48 determines whether or not a concentration of ammonia in the absorbing liquid flowing through the absorbing liquid release line 45 is equal to or higher than a second threshold value based on the detection result of the release line sensor 47 (step S03). In this determination, the determination is made whether or not the concentration of ammonia in the absorbing liquid, which is released to the outside of the floating main structure 2 via the absorbing liquid release line 45, satisfies, for example, a rule related to ocean release. As a result of this determination, when the determination is made that the concentration of ammonia in the absorbing liquid flowing through the absorbing liquid release line 45 is not equal to or higher than the second threshold value, the process returns to step S01 (return). On the other hand, when the determination is made that the concentration of ammonia in the absorbing liquid flowing through the absorbing liquid release line 45 is equal to or higher than the second threshold value, the air volume of the exhaust fan 42 is reduced by a predetermined amount, and the process returns to step S03. That is, the air volume of the exhaust fan 42 is reduced until the concentration of ammonia in the absorbing liquid flowing through the absorbing liquid release line 45 becomes less than a predetermined value.

### (Effects of Action)

The floating structure 1 of the first embodiment includes: the floating main structure 2; the compartment 30 that is provided in the floating main structure 2 and that accommodates ammonia-related equipment inside the compartment 30; the duct 41 that is connected to the compartment 30 and that makes an inside of the compartment and an outside of the compartment 30 communicate with each other; the exhaust fan 42 that discharges the air at the inside of the compartment 30 to the outside of the compartment 30 via the duct 41; the absorbing liquid supply line 43 that supplies the absorbing liquid capable of absorbing the ammonia; the scrubber 44 that is disposed on the outside of the compartment 30 and that is capable of removing ammonia, which is contained in the air discharged by the exhaust fan 42 via the duct 41, by absorbing the ammonia with the absorbing liquid supplied through the absorbing liquid supply line 43; and the absorbing liquid release line 45 that releases at least the absorbing liquid, which has absorbed the ammonia in the scrubber 44, into water around which the floating main structure 2 floats.

In this way, the ammonia can be removed by introducing the air that contains the ammonia leaked and vaporized inside the compartment 30 to the scrubber 44 via the duct 41. Further, since the absorbing liquid that has absorbed the ammonia in the scrubber 44 is released into water via the absorbing liquid release line 45, it is possible to prevent the ammonia contained in the absorbing liquid from re-vaporizing, being released into the atmosphere, and coming into contact with the worker. Furthermore, since the absorbing liquid that has absorbed ammonia does not remain inside the floating main structure 2, the contact between the absorbing liquid that has absorbed ammonia and the worker can be prevented. Therefore, it is possible to prevent the worker from coming into contact with the ammonia without flooding the equipment inside the compartment 30.

The floating structure 1 of the first embodiment further includes the in-compartment sensor 46 that is capable of detecting the ammonia contained in the air at the inside of the compartment 30.

As a result, the leakage of the ammonia inside the compartment 30 can be detected based on the detection result of the in-compartment sensor 46. Therefore, it is possible to operate the exhaust fan 42 to remove the ammonia only when the leakage of the ammonia occurs inside the compartment 30, and energy saving can be achieved.

The floating structure 1 of the first embodiment further includes the release line sensor 47 capable of detecting the ammonia contained in the fluid flowing through the absorbing liquid release line 45.

As a result, for example, when the concentration of ammonia contained in the fluid flowing through the absorbing liquid release line 45 is high, the flow rate of the air, which is introduced from the compartment 30 to the scrubber 44, can be reduced to prevent the concentration of ammonia in the fluid discharged through the absorbing liquid release line 45 from exceeding a regulation value.

The exhaust fan 42 of the floating structure 1 of the first embodiment is a variable speed fan capable of regulating the air volume.

In this way, for example, when the concentration of ammonia contained in the fluid flowing through the absorbing liquid release line 45 is high, by reducing the air volume of the exhaust fan 42 according to the concentration of ammonia, the concentration of ammonia in the fluid flowing through the absorbing liquid release line 45 can be reduced.

The floating structure 1 of the first embodiment includes the control device 48 that determines whether or not the leakage of the ammonia has occurred based on the detection result of the in-compartment sensor 46 and that operates the exhaust fan 42 when the determination is made that the leakage of the ammonia has occurred.

In this way, the ammonia leaked inside the compartment 30 can be automatically removed by the control device 48.

Further, the control device 48 of the first embodiment operates the exhaust fan 42 when a determination is made that the leakage of the ammonia has occurred and regulates the air volume of the exhaust fan 42 based on the detection result of the release line sensor 47.

In this way, the control device 48 can automatically prevent the concentration of ammonia contained in the fluid flowing through the absorbing liquid release line 45 from exceeding the regulation value.

The control device 48 of the first embodiment further includes the ventilation exhaust fan 56 and the ventilation exhaust damper 59 that release the air at the inside of the compartment 30 to the outside of the floating main structure 2.

As a result, when the leakage of the ammonia does not occur, the ventilation inside the compartment 30 can be performed by the ventilation exhaust fan 56.

### (Second Embodiment)

Next, the floating structure according to a second embodiment of the present disclosure will be described with reference to the drawings. The second embodiment differs from the first embodiment described above only in a method of regulating the flow rate of the air flowing through the duct 41. Therefore, in the second embodiment, the same parts as those in the first embodiment described above will be described with the same reference numerals, and redundant descriptions will be omitted.

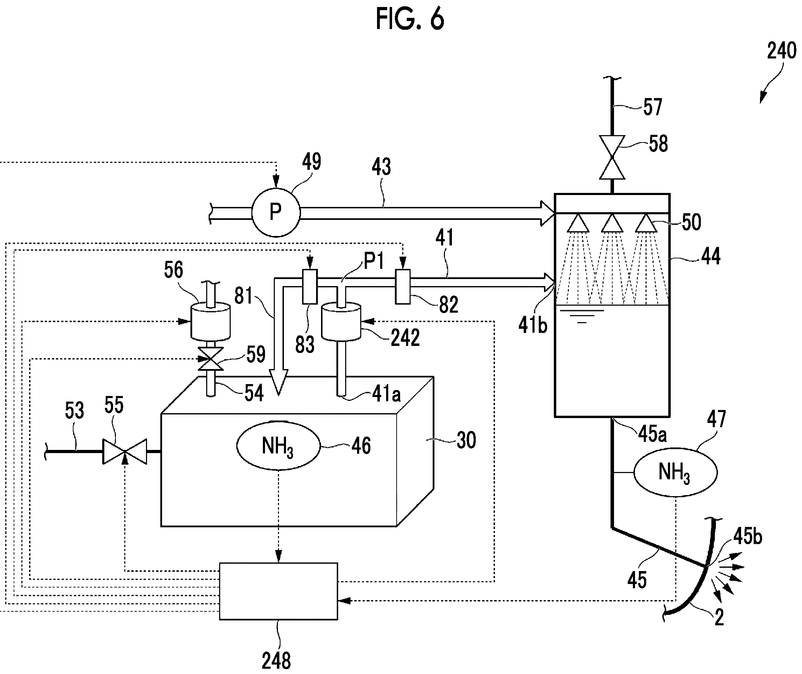

Fig. 6 is a diagram corresponding to Fig. 2 in the second embodiment of the present disclosure.

The floating structure 1 of the second embodiment includes the floating main structure 2, the superstructure 4, the combustion equipment 8, the ammonia tank 10, the pipe system 20, the compartment 30, and an ammonia removal system 240.

### (Configuration of Ammonia Removal System)

As shown in Fig. 6, the ammonia removal system 240 includes the duct 41, an exhaust fan 242, the absorbing liquid supply line 43, the scrubber (ammonia removal portion) 44, the absorbing liquid release line 45, the in-compartment sensor 46, the release line sensor 47, a circulation duct 81, a duct damper 82, a circulation duct damper 83, and a control device 248.

The exhaust fan 242 discharges the air at the inside of the compartment 30 toward the outside of the compartment 30 via the duct 41. The exhaust fan 242 is provided in the duct 41 on a side closer to the first end portion 41a. The exhaust fan 242 of the present embodiment is a constant speed rotation fan that maintains a constant flow rate during steady operation. Switching control between operation and stop of the exhaust fan 242 is performed by the control device 248.

The circulation duct 81 is branched and connected to the duct 41 which makes the compartment 30 and the scrubber 44 communicate with each other. The circulation duct 81 forms a flow path for returning the air flowing through the duct 41 to the compartment 30. The circulation duct 81 branches from the duct 41 between the exhaust fan 242 and the scrubber 44.

The duct damper 82 is provided in the duct 41. The duct damper 82 is capable of regulating the flow rate of the air flowing inside the duct 41. The duct damper 82 is disposed closer to the scrubber 44 than a branch point P1 of the circulation duct 81. The duct damper 82 of the present embodiment is controlled by the control device 248.

The circulation duct damper 83 is provided in the circulation duct 81. The circulation duct damper 83 is capable of regulating the flow rate of the air flowing inside the circulation duct 81. The circulation duct damper 83 of the present embodiment is controlled by the control device 248.

### (Configuration of Control Device)

The control device 248 controls the ammonia removal system 240. More specifically, the control device 248 determines whether or not the leakage of the ammonia has occurred, based on the detection result of the in-compartment sensor 46. Based on this determination, when the determination is made that the leakage of the ammonia has not occurred, the control device 248 sets the exhaust fan 242 in a stop state without operating the exhaust fan 242. The exhaust fan 242 may be constantly operated, and in this case, when the determination is made that the leakage of the ammonia has not occurred, the duct damper 82 may be set in a closed state, and the circulation duct damper 83 may be set in an open state.

On the other hand, based on this determination, when the determination is made that the leakage of the ammonia has occurred, the control device 248 sets the exhaust fan 242 and the pump 49 in an operating state. Furthermore, the control device 248 controls the duct damper 82 and the circulation duct damper 83 based on the detection result of the release line sensor 47. More specifically, the control device 248 regulates the flow rate of the air flowing through the duct 41 and the flow rate of the air flowing through the circulation duct 81 by using the duct damper 82 and the circulation duct damper 83 based on the detection results of the release line sensor 47. In other words, the flow rate of the air flowing into the inside of the scrubber 44 is regulated by returning a part of the air sent by the exhaust fan 242 to the compartment 30. Since the hardware configuration of the control device 248 of the second embodiment is the same as that of the first embodiment, a detailed description thereof will be omitted.

### (Functional Block Diagram of Control Device)

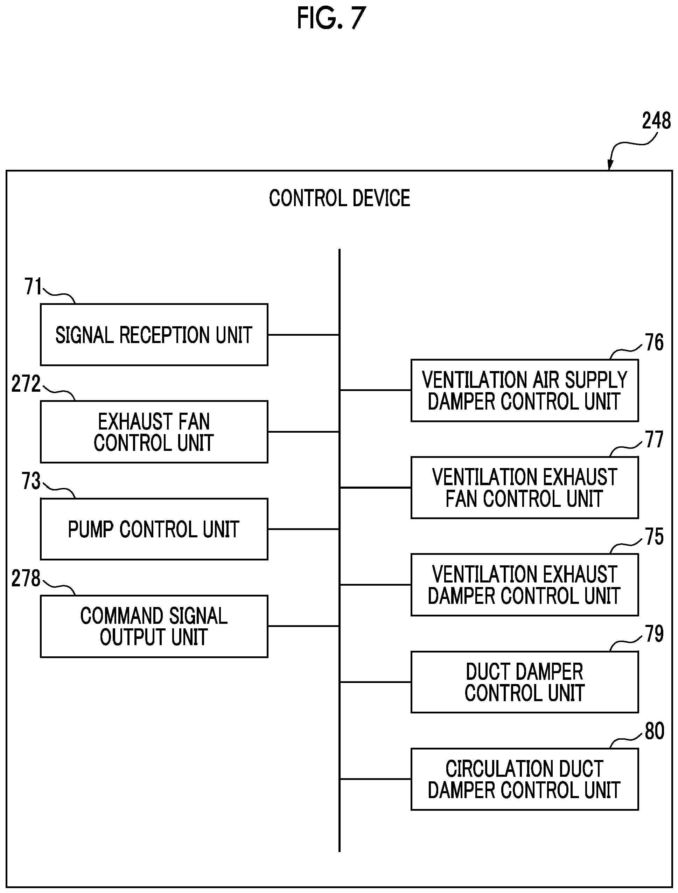

Fig. 7 is a functional block diagram of the control device described above.

By the CPU 61 of the control device 248 executing a program stored in advance in the HDD 64, ROM 62, or the like, each functional configuration of the signal reception unit 71, an exhaust fan control unit 272, the pump control unit 73, the ventilation exhaust damper control unit 75, the ventilation air supply damper control unit 76, the ventilation exhaust fan control unit 77, a command signal output unit 278, a duct damper control unit 79, and a circulation duct damper control unit 80 is implemented. The signal reception unit 71, the pump control unit 73, the ventilation exhaust damper control unit 75, the ventilation air supply damper control unit 76, and the ventilation exhaust fan control unit 77 are the same as those of the control device 48 of the first embodiment described above.

The exhaust fan control unit 272 controls the operation and stop of the exhaust fan 242 based on the detection signal of the in-compartment sensor 46 and the detection signal of the release line sensor 47 received by the signal reception unit 71.

The duct damper control unit 79 controls an opening degree of the duct damper 82 based on the detection result of the release line sensor 47.

The circulation duct damper control unit 80 controls an opening degree of the circulation duct damper 83 according to one or both of the opening degree of the duct damper 82 by the duct damper control unit 79 and the detection result of the release line sensor 47. Specifically, the circulation duct damper control unit 80 controls the opening degree of the circulation duct damper 83 such that the flow rate of the air flowing through the duct 41 becomes a flow rate in accordance with the opening degree of the duct damper 82.

The command signal output unit 278 outputs command signals to each of the exhaust fan 42, the pump 49, the ventilation exhaust damper 59, the ventilation air supply damper 55, the ventilation exhaust fan 56, the duct damper 82, and the circulation duct damper 83 in order to implement each control by the exhaust fan control unit 272, the pump control unit 73, the ventilation exhaust damper control unit 75, the ventilation air supply damper control unit 76, the ventilation exhaust fan control unit 77, the duct damper control unit 79, and the circulation duct damper control unit 80.

Regarding the operation of the control device 248, the only difference from step S04 of the first embodiment described above is that the opening degrees of the respective duct damper 82 and the circulation duct damper 83 are changed to regulate the flow rate of the air flowing into the inside of the scrubber 44 via the duct 41, so a detailed explanation will be omitted.

### (Effects of Action)

According to the floating structure 1 of the second embodiment, in the same manner as the floating structure 1 of the first embodiment, the ammonia can be removed by introducing the air that contains the ammonia leaked and vaporized inside the compartment 30 to the scrubber 44 via the duct 41. Further, since the absorbing liquid that has absorbed the ammonia in the scrubber 44 is released into water via the absorbing liquid release line 45, it is possible to prevent the ammonia contained in the absorbing liquid from re-vaporizing, being released into the atmosphere, and coming into contact with the worker. Furthermore, since the absorbing liquid that has absorbed ammonia does not remain inside the floating main structure 2, the contact between the absorbing liquid that has absorbed ammonia and the worker can be prevented. Therefore, it is possible to prevent the worker from coming into contact with the ammonia without flooding the equipment inside the compartment 30.

The floating structure 1 of the second embodiment further includes: the circulation duct 81 that is branched and connected to the duct 41 and that returns the air flowing through the duct 41 to the compartment 30; the duct damper 82 that is provided in the duct 41 and that is capable of regulating the flow rate of the air flowing inside the duct 41; and the circulation duct damper 83 that is provided in the circulation duct 81 and that is capable of regulating the flow rate of the air flowing inside the circulation duct 81. The exhaust fan 242 is a constant speed fan that maintains a constant flow rate.

With such a configuration, even when the air volume of the exhaust fan 242 cannot be regulated, the flow rate of the air flowing from the duct 41 into the inside of the scrubber 44 can be changed. Therefore, for example, when the concentration of ammonia contained in the fluid flowing through the absorbing liquid release line 45 is high, the flow rate of the air introduced into scrubber 44 can be reduced by increasing the flow rate of the air returned to compartment 30 by circulation duct 81. As a result, the concentration of ammonia in the fluid discharged through the absorbing liquid release line 45 can be prevented from exceeding the regulation value while using the constant speed fan as the exhaust fan 242.

The floating structure 1 of the second embodiment further includes the control device 248 that controls the duct damper 82 and the circulation duct damper 83 based on the detection results of the in-compartment sensor 46 and the release line sensor 47. When the determination is made that the leakage of the ammonia has occurred based on the detection result of the in-compartment sensor 46, the control device 248 regulates the flow rate of the air flowing into the scrubber 44 by regulating the flow rate of the air flowing through the duct 41 and the flow rate of the air flowing through the circulation duct 81 by using the duct damper 82 and the circulation duct damper 83 based on the detection result of the release line sensor 47.

In this way, even when the exhaust fan 242 is a constant speed fan, the control device 248 can automatically prevent the concentration of ammonia contained in the fluid flowing through the absorbing liquid release line 45 from exceeding the regulation value.

### (Third Embodiment)

Next, the floating structure according to a third embodiment of the present disclosure will be described with reference to the drawings. The third embodiment is different only in that the exhaust fan of the first embodiment described above is also used as the ventilation exhaust fan. Therefore, in the third embodiment, the same parts as those in the first embodiment described above will be described with the same reference numerals, and redundant descriptions will be omitted.

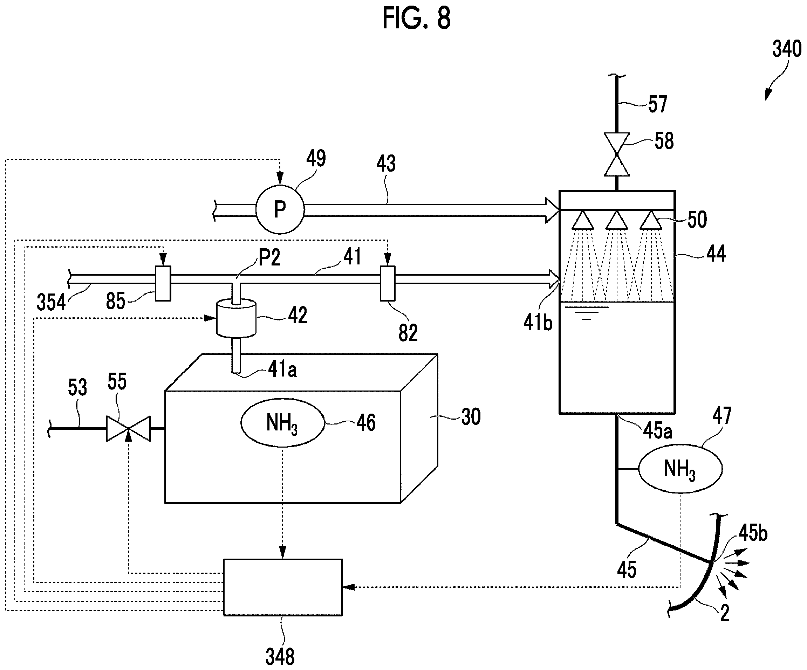

Fig. 8 is a diagram corresponding to Fig. 2 in the third embodiment of the present disclosure.

The floating structure 1 of the third embodiment includes the floating main structure 2, the superstructure 4, the combustion equipment 8, the ammonia tank 10, the pipe system 20, the compartment 30, and an ammonia removal system 340. In the same manner as the first embodiment, the ventilation air supply duct 53 for ventilating the inside of the compartment 30 is connected to the compartment 30, and the ventilation air supply damper 55 is provided in the ventilation air supply duct 53.

### (Configuration of Ammonia Removal System)

As shown in Fig. 8, the ammonia removal system 340 includes the duct 41, the exhaust fan 42, the absorbing liquid supply line 43, the scrubber (ammonia removal portion) 44, the absorbing liquid release line 45, the in-compartment sensor 46, the release line sensor 47, a ventilation exhaust duct 354, the duct damper 82, an exhaust duct damper 85, and a control device 348.

The duct 41 has the same configuration as the duct 41 of the first embodiment and includes the first end portion 41a connected to the compartment 30 and the second end portion 41b connected to the scrubber 44. The duct 41 makes the internal space of the compartment 30 and the internal space of the scrubber 44 communicate with each other.

The exhaust fan 42 has the same configuration as the exhaust fan 42 of the first embodiment. The exhaust fan 42 is a variable speed fan capable of regulating the air volume by the control device 348. The exhaust fan 42 is disposed in the vicinity of the first end portion 41a of the duct 41 on a side closer to the compartment 30 and discharges the air at the inside of the compartment 30 to the outside of the compartment 30 via the duct 41.

The ventilation exhaust duct 354 is branched and connected to the duct 41. The ventilation exhaust duct 354 is configured to make the flow path inside the duct 41 and the outside of the floating main structure 2 communicate with each other and to be capable of discharging the air flowing through the duct 41 to the outside of the floating main structure 2. The ventilation exhaust duct 354, together with the ventilation air supply duct 53 and the duct 41, constitutes a flow path for ventilating inside the compartment 30.

The duct damper 82 has the same configuration as the duct damper 82 of the second embodiment, is provided in the duct 41, and can regulate the flow rate of the air flowing inside the duct 41. The duct damper 82 in the third embodiment is disposed closer to the scrubber 44 than a branch point P2 between the duct 41 and the ventilation exhaust duct 354. The duct damper 82 is controlled by the control device 348.

The exhaust duct damper 85 is provided in the ventilation exhaust duct 354 and can regulate the flow rate of the air flowing inside the ventilation exhaust duct 354. The exhaust duct damper 85 is controlled by the control device 348.

### (Configuration of Control Device)

The control device 348 controls the ammonia removal system 340. The control device 348 determines whether or not the leakage of the ammonia has occurred, based on the detection result of the in-compartment sensor 46. Based on this determination, when the determination is made that the leakage of the ammonia has not occurred, the control device 348 sets the air volume of the exhaust fan 42 to the air volume for ventilation. Further, the control device 348 sets the duct damper 82 in a closed state and sets the exhaust duct damper 85 in an open state.

Based on the determination, when the determination is made that the leakage of the ammonia has occurred, the control device 348 sets the pump 49 in an operating state, sets the duct damper 82 in an open state, and sets the exhaust duct damper 85 in an open state. Furthermore, the control device 348 of the third embodiment regulates the flow rate of the air flowing into the scrubber 44 by regulating the air volume of the exhaust fan 42 based on the detection result of the release line sensor 47. Since the hardware configuration of the control device 348 of the third embodiment is the same as that of the first embodiment, a detailed description thereof will be omitted.

### (Functional Block Diagram of Control Device)

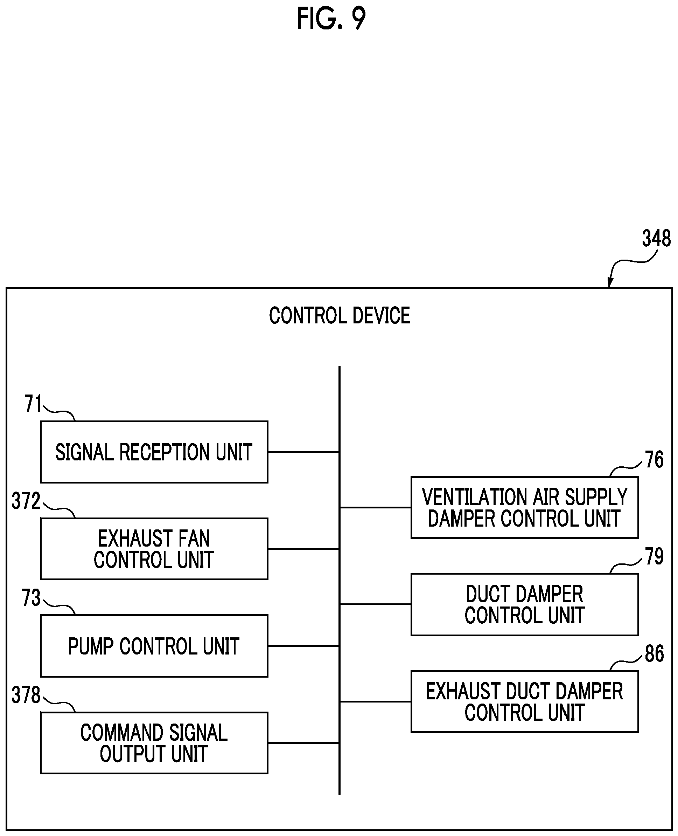

Fig. 9 is a functional block diagram of the control device described above.

By the CPU 61 of the control device 348 executing a program stored in advance in the HDD 64, ROM 62, or the like, each functional configuration of the signal reception unit 71, an exhaust fan control unit 372, the pump control unit 73, the ventilation air supply damper control unit 76, a command signal output unit 378, the duct damper control unit 79, and an exhaust duct damper control unit 86 is implemented. The signal reception unit 71, the pump control unit 73, and the ventilation air supply damper control unit 76 have the same configuration as the control device 48 of the first embodiment described above.

The exhaust fan control unit 372 controls the air volume of the exhaust fan 42 based on the detection signal of the in-compartment sensor 46 and the detection signal of the release line sensor 47 received by the signal reception unit 71. For example, when the determination is made that the leakage of the ammonia has not occurred inside the compartment 30 based on the detection result of the in-compartment sensor 46, the exhaust fan control unit 372 operates the exhaust fan 42 with an air volume for normal ventilation within the compartment 30 (hereinafter, referred to as a ventilation air volume) . On the other hand, when the determination is made that the leakage of the ammonia has occurred inside the compartment 30, the exhaust fan control unit 372 operates the exhaust fan 42 with an air volume for sending the air inside the compartment 30 to the scrubber 44 (hereinafter, referred to as a removing air volume).

The duct damper control unit 79 controls the opening degree of the duct damper 82 based on the detection result of the in-compartment sensor 46. Specifically, the duct damper control unit 79 sets the duct damper 82 in an open state (for example, fully open) when the determination is made that the leakage of the ammonia has occurred inside the compartment 30 based on the detection result of the in-compartment sensor 46. On the other hand, the duct damper control unit 79 sets the duct damper 82 in a closed state (for example, fully closed) when the determination is made that the leakage of the ammonia has not occurred inside the compartment 30.

The exhaust duct damper control unit 86 controls an opening degree of the exhaust duct damper 85 based on the detection result of the in-compartment sensor 46. Specifically, the exhaust duct damper control unit 86 sets the exhaust duct damper 85 in a fully closed state when the determination is made that the leakage of the ammonia has occurred inside the compartment 30 based on the detection result of the in-compartment sensor 46. On the other hand, when the determination is made that the leakage of the ammonia has not occurred inside the compartment 30, the exhaust duct damper 85 is set in an open state (for example, fully open).

The command signal output unit 378 outputs command signals to each of the exhaust fan 42, the pump 49, the ventilation air supply damper 55, the duct damper 82, and the exhaust duct damper 85 in order to implement each control by the signal reception unit 71, the exhaust fan control unit 372, the pump control unit 73, the ventilation air supply damper control unit 76, the command signal output unit 378, the duct damper control unit 79, and the exhaust duct damper control unit 86.

### (Operation of Control Device)

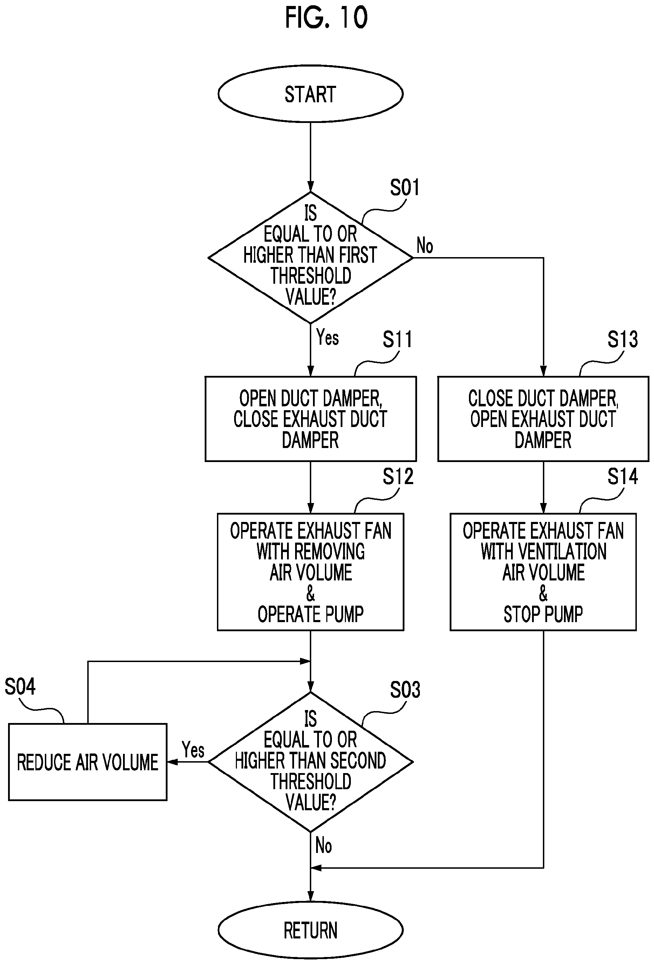

Fig. 10 is a flowchart of the ammonia removal processing in an embodiment of the present disclosure.

Next, the operation of the control device 348 when removing the ammonia inside the compartment 30 of the floating structure 1 described above will be described with reference to the flowchart in Fig. 10.

First, the exhaust fan control unit 72, the pump control unit 73, the duct damper control unit 79, and the exhaust duct damper control unit 86 of the control device 348 determine whether or not the concentration of ammonia inside the compartment 30 is equal to or higher than the predetermined first threshold value based on the detection result of the in-compartment sensor 46 (step S01). When the determination is made that the concentration of ammonia inside the compartment 30 is not equal to or higher than the first threshold value, since there is no leakage of ammonia inside the compartment 30, the duct damper control unit 79 sets the duct damper 82 in a closed state, and the exhaust duct damper control unit 86 sets the exhaust duct damper 85 in an open state (step S13). Further, the exhaust fan control unit 72 operates the exhaust fan 42 with the ventilation air volume, and the pump control unit 73 sets the pump 49 in a stop state (step S14). At this time, the ventilation air supply damper control unit 76 sets the ventilation air supply damper 55 in an open state. As a result, the inside of the compartment 30 is ventilated. After that, the process returns to step S01.

On the other hand, in step S01, when the determination is made that the concentration of ammonia inside the compartment 30 is equal to or higher than the predetermined first threshold value, since there is the leakage of the ammonia inside the compartment 30, the duct damper control unit 79 sets the duct damper 82 in an open state, and the exhaust duct damper control unit 86 sets the exhaust duct damper 85 in a closed state (step S11) . Further, the exhaust fan control unit 72 operates the exhaust fan 42 with the removing air volume, and the pump control unit 73 operates the pump 49 (step S12). At this time, the ventilation air supply damper control unit 76 maintains the inside of the compartment 30 at predetermined negative pressure by regulating the opening degree of the ventilation air supply damper 55. As a result, the air inside the compartment 30 is sent inside the scrubber 44.

Next, in the same manner as the first embodiment described above, the exhaust fan control unit 72 of the control device 348 determines whether or not a concentration of ammonia in the absorbing liquid flowing through the absorbing liquid release line 45 is equal to or higher than a second threshold value based on the detection result of the release line sensor 47 (step S03). In this determination, the determination is made whether or not the concentration of ammonia in the absorbing liquid, which is released to the outside of the floating main structure 2 via the absorbing liquid release line 45, satisfies, for example, a rule related to ocean release. As a result of this determination, when the determination is made that the concentration of ammonia in the absorbing liquid flowing through the absorbing liquid release line 45 is not equal to or higher than the second threshold value, the process returns to step S01. On the other hand, when the determination is made that the concentration of ammonia in the absorbing liquid flowing through the absorbing liquid release line 45 is equal to or higher than the second threshold value, the air volume of the exhaust fan 42 is reduced by a predetermined amount, and the process returns to step S03. That is, the air volume of the exhaust fan 42 is reduced until the concentration of ammonia in the absorbing liquid flowing through the absorbing liquid release line 45 becomes less than a predetermined value.

### (Effects of Action)

According to the floating structure 1 of the third embodiment, in the same manner as the floating structure 1 of the first embodiment, the ammonia can be removed by introducing the air that contains the ammonia leaked and vaporized inside the compartment 30 to the scrubber 44 via the duct 41. Further, since the absorbing liquid that has absorbed the ammonia in the scrubber 44 is released into water via the absorbing liquid release line 45, it is possible to prevent the ammonia contained in the absorbing liquid from re-vaporizing, being released into the atmosphere, and coming into contact with the worker. Furthermore, since the absorbing liquid that has absorbed ammonia does not remain inside the floating main structure 2, the contact between the absorbing liquid that has absorbed ammonia and the worker can be prevented. Therefore, it is possible to prevent the worker from coming into contact with the ammonia without flooding the equipment inside the compartment 30.

The floating structure 1 of the third embodiment includes the ventilation exhaust duct 354, the duct damper 82, and the exhaust duct damper 85. In this way, it is possible to switch between a flow path, which makes the inside of the compartment 30 and the outside of the ship communicate with each other, and a flow path, which makes the inside of the compartment 30 and the inside of the scrubber 44 communicate with each other, and use the flow paths. Further, since the exhaust fan 42 is provided in a common portion of the two flow paths that are switched and used, the compartment 30 can be ventilated or the air inside the compartment 30 can be sent to the scrubber 44 by using one exhaust fan 42. Therefore, the number of parts can be reduced as compared with a case where a ventilation fan and an ammonia removal fan are separately provided.

### (Fourth Embodiment)

Next, the floating structure according to a fourth embodiment of the present disclosure will be described with reference to the drawings. In the fourth embodiment, the ventilation exhaust duct 54 and the ventilation exhaust fan 56 are omitted from the first embodiment described above. Therefore, in the fourth embodiment, the same parts as those in the first embodiment described above will be described with the same reference numerals, and redundant descriptions will be omitted.

### (Configuration of Ammonia Removal System)

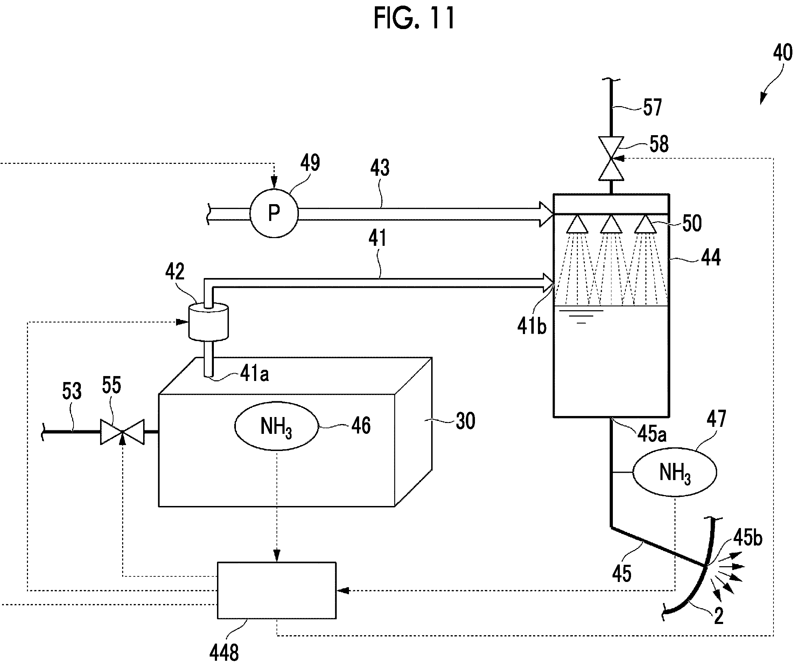

Fig. 11 is a diagram corresponding to Fig. 2 in the fourth embodiment of the present disclosure.

As shown in Fig. 11, the ammonia removal system 40 of the fourth embodiment includes a duct 41, an exhaust fan 42, an absorbing liquid supply line 43, a scrubber 44, an absorbing liquid release line 45, an in-compartment sensor 46, a release line sensor 47, and a control device 448.

Further, the ventilation air supply duct 53 for ventilating the inside of the compartment 30 is connected to the compartment 30. Further, the ventilation air supply damper 55 is attached to the ventilation air supply duct 53.

### (Configuration of Control Device)

The control device 448 has the same configuration as the control device 48 of the first embodiment described above, in that ammonia contained in the air inside the compartment 30 is removed by the scrubber 44. On the other hand, the control device 448 controls opening and closing of the opening-closing damper 58 based on the detection result of the in-compartment sensor 46. That is, the control device 448 switches between a state in which the opening-closing damper 58 is opened and the air inside the compartment 30 can be discharged to the outside of the floating main structure 2 via the duct 41, the scrubber 44, and the atmosphere release line 57, and a state in which the opening-closing damper 58 is closed, the air inside the compartment 30 has flowed inside the scrubber 44 to remove the ammonia, and the air is discharged from the absorbing liquid release line 45.

### (Functional Block Diagram of Control Device)

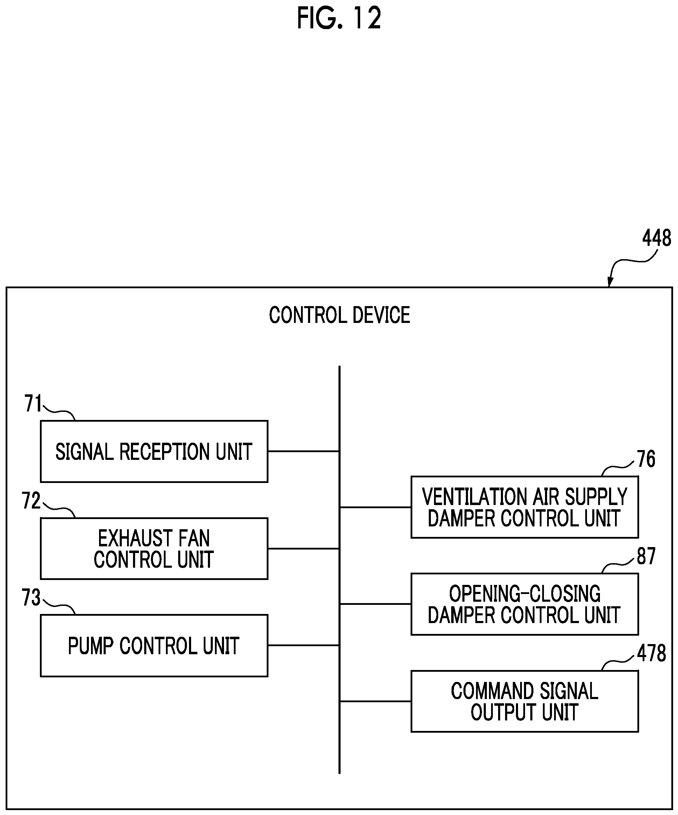

Fig. 12 is a functional block diagram of the control device described above.

By the CPU 61 of the control device 448 executing a program stored in advance in the HDD 64, ROM 62, or the like, each functional configuration of the signal reception unit 71, the exhaust fan control unit 72, the pump control unit 73, the ventilation air supply damper control unit 76, a command signal output unit 478, and an opening-closing damper control unit 87 is implemented.

The opening-closing damper control unit 87 controls opening and closing of the opening-closing damper 58 based on the detection signal of the in-compartment sensor 46. Specifically, the opening-closing damper control unit 87 sets the opening-closing damper 58 in a closed state when the determination is made that the leakage of the ammonia has occurred inside the compartment 30 based on the detection result of the in-compartment sensor 46. On the other hand, the opening-closing damper control unit 87 sets the opening-closing damper 58 in an open state when the determination is made that the leakage of the ammonia has not occurred inside the compartment 30.

The command signal output unit 478 outputs command signals to each of the exhaust fan 42, the pump 49, the ventilation air supply damper 55, and the opening-closing damper 58 in order to implement each control by the exhaust fan control unit 72, the pump control unit 73, the ventilation air supply damper control unit 76, and the opening-closing damper control unit 87.

### (Operation of Control Device)

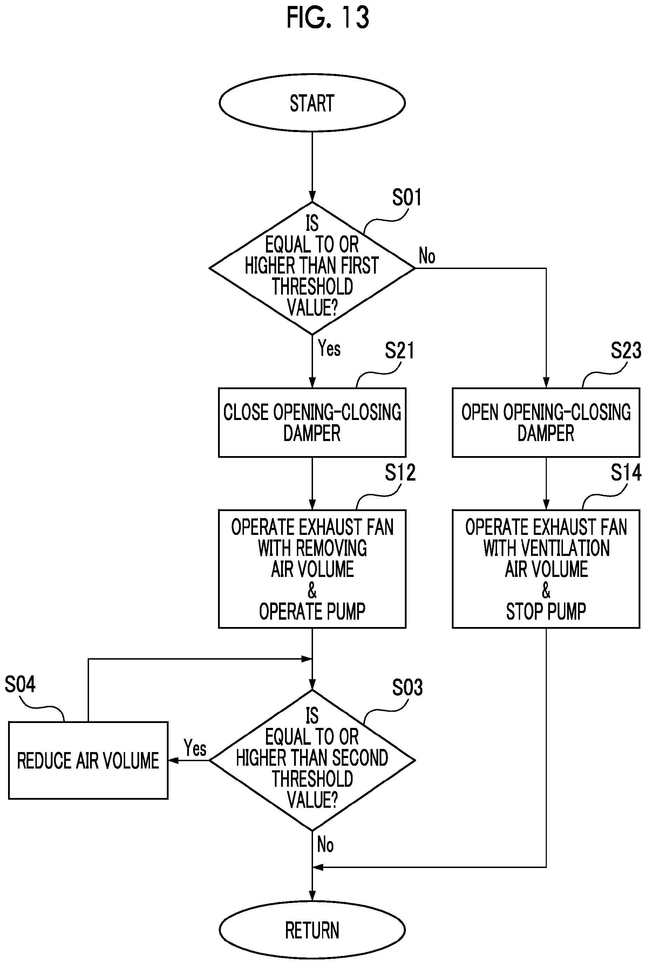

Fig. 13 is a flowchart of the ammonia removal processing in the first embodiment of the present disclosure.

Next, the operation of the control device 448 when removing the ammonia inside the compartment 30 of the floating structure 1 described above will be described with reference to the flowchart in Fig. 13. Regarding the operation of the control device 448, step S11 in the flowchart shown in Fig. 10 of the third embodiment described above is replaced with step S21, and step S13 is replaced with step S23.

First, the exhaust fan control unit 72, the pump control unit 73, the duct damper control unit 79, and the opening-closing damper control unit 87 of the control device 448 determine whether or not the concentration of ammonia inside the compartment 30 is equal to or higher than the predetermined first threshold value based on the detection result of the in-compartment sensor 46 (step S01). When the determination is made that the concentration of ammonia inside the compartment 30 is not equal to or higher than the first threshold value, since there is no leakage of ammonia inside the compartment 30, the opening-closing damper control unit 87 sets the opening-closing damper 58 in an open state (step S23). Further, the exhaust fan control unit 72 operates the exhaust fan 42 with the ventilation air volume, and the pump control unit 73 sets the pump 49 in a stop state (step S14). At this time, the ventilation air supply damper control unit 76 sets the ventilation air supply damper 55 in an open state. As a result, the inside of the compartment 30 is ventilated via the ventilation air supply duct 53, the duct 41, the scrubber 44, and the atmosphere release line 57. After that, the process returns to step S01. In step S14, the pump control unit 73 may continue the operation without stopping the pump 49.

On the other hand, in step S01, when the determination is made that the concentration of ammonia inside the compartment 30 is equal to or higher than the predetermined first threshold value, since there is the leakage of the ammonia inside the compartment 30, the duct damper control unit 79 sets the opening-closing damper 58 in a closed state (step S21). Further, the exhaust fan control unit 72 operates the exhaust fan 42 with the removing air volume, and the pump control unit 73 operates the pump 49 (step S12) . At this time, the ventilation air supply damper control unit 76 maintains the inside of the compartment 30 at predetermined negative pressure by regulating the opening degree of the ventilation air supply damper 55. As a result, the air inside the compartment 30 is sent inside the scrubber 44 but is not released to the atmosphere via the atmosphere release line 57. The description of step S03 and step S04 will be omitted because these steps are the same as those in the first embodiment described above.

### (Effects of Action)

According to the floating structure 1 of the fourth embodiment, in the same manner as the floating structure 1 of the first embodiment, the ammonia can be removed by introducing the air that contains the ammonia leaked and vaporized inside the compartment 30 to the scrubber 44 via the duct 41. Further, since the absorbing liquid that has absorbed the ammonia in the scrubber 44 is released into water via the absorbing liquid release line 45, it is possible to prevent the ammonia contained in the absorbing liquid from re-vaporizing, being released into the atmosphere, and coming into contact with the worker. Furthermore, since the absorbing liquid that has absorbed ammonia does not remain inside the floating main structure 2, the contact between the absorbing liquid that has absorbed ammonia and the worker can be prevented. Therefore, it is possible to prevent the worker from coming into contact with the ammonia without flooding the equipment inside the compartment 30.

The control device 448 of the fourth embodiment controls opening and closing of the opening-closing damper 58. In this way, the atmosphere release line 57 can be used instead of the ventilation exhaust duct by using one exhaust fan 42. Further, the ventilation exhaust duct can be omitted. Therefore, the number of parts can be reduced as compared with a case where a ventilation fan and an ammonia removal fan are separately provided or a ventilation exhaust duct is provided. As a result, the inside of the compartment 30 can be ventilated, and the ammonia can be removed by sending the air inside the compartment 30 to the scrubber 44. Furthermore, when the leakage of the ammonia occurs, it is possible to prevent the air containing the ammonia from coming into contact with the worker.

### (First Modification Example of Each Embodiment)

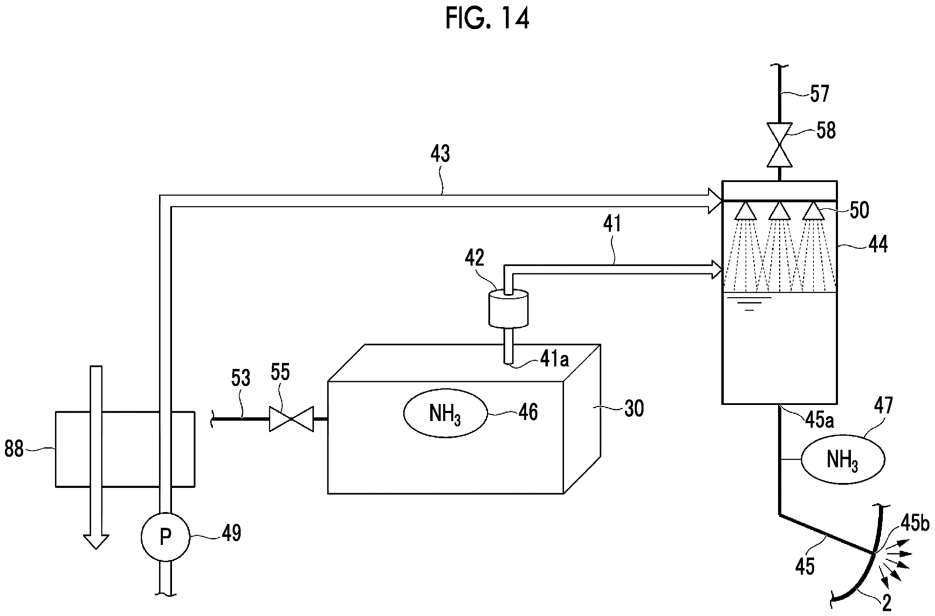

Next, a first modification example of each embodiment of the present disclosure will be described based on Fig. 14. In this first modification example, since the configuration related to the supply of the absorbing liquid is only different from each of the embodiments described above, the same parts as in each embodiment will be described with the same reference numerals, and redundant descriptions will be omitted. Further, a case where the present modification example is applied to the first embodiment will be described as an example.

Fig. 14 is a diagram corresponding to Fig. 2 in a first modification example of the embodiment of the present disclosure.

As shown in Fig. 14, the ammonia removal system 40 of the first modification example includes a duct 41, an exhaust fan 42, an absorbing liquid supply line 43, a scrubber 44, an absorbing liquid release line 45, an in-compartment sensor 46, a release line sensor 47, the control device 48, and a heat exchanger 88.

The heat exchanger 88 exchanges heat between the absorbing liquid flowing inside the absorbing liquid supply line 43 and an external heat medium to heat or cool the absorbing liquid. The heat exchanger 88 of the present modification example exchanges heat between the absorbing liquid and the heat medium such as heated water for heating the fuel ammonia in order to effectively use the cold energy of the fuel ammonia, for example, and reduces the temperature of the absorbing liquid. Here, when an absorption rate of ammonia can be improved as the temperature of the absorbing liquid increases, the absorbing liquid may be heated by using the heat exchanger 88.

Therefore, according to the first modification example, since the absorption rate of ammonia can be improved by using the absorbing liquid, it is possible to reduce the energy consumed by the pump 49.

### (Second Modification Example of Each Embodiment)

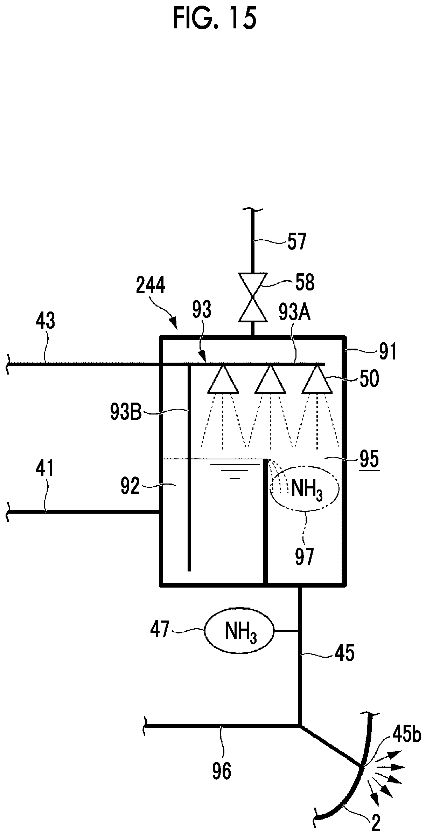

Next, a second modification example of each embodiment of the present disclosure will be described based on Fig. 15. In the second modification example, since the configuration of the scrubber is only different from each embodiment described above, the same parts as in each embodiment will be described with the same reference numerals, and redundant descriptions will be omitted.

Fig. 15 is an enlarged view of a scrubber in a second modification example of each embodiment of the present disclosure.

As shown in Fig. 15, the scrubber 244 in the second modification example is disposed at the outside of the compartment 30 in the same manner as the scrubber 44 described above. The scrubber 244 is configured to be capable of removing the ammonia, which is contained in the air discharged from the compartment 30 via the duct 41, by absorbing the ammonia with the absorbing liquid supplied through the absorbing liquid supply line 43.

The scrubber 244 includes a scrubber casing 91, a liquid storage portion 92, a nozzle portion 50, and an internal absorbing liquid supply line 93.

The scrubber casing 91 defines an internal space 95 of the scrubber 244.

The liquid storage portion 92 is configured to be capable of storing the absorbing liquid in at least a part of the internal space 95. The liquid storage portion 92 of the second modification example forms a storing space for storing the absorbing liquid together with the scrubber casing 91. The liquid storage portion 92 is capable of making the absorbing liquid overflow from an upper portion thereof, and the overflowed absorbing liquid is discharged to the outside of the scrubber casing 91 through the absorbing liquid release line 45. The duct 41 is connected on a lower side of a liquid level of the liquid storage portion 92, and the air sent via the duct 41 is released into the absorbing liquid stored in the liquid storage portion 92 and moves upward as bubbles. The air that has reached the liquid level of the liquid storage portion 92 is released from the liquid level to inside the internal space 95.

The internal absorbing liquid supply line 93 supplies the absorbing liquid to the nozzle portion 50 and the liquid storage portion 92. The internal absorbing liquid supply line 93 includes a main line 93A that supplies the absorbing liquid to the nozzle portion 50 and a branch line 93B that branches from the main line 93A and that reaches the liquid storage portion 92.

The nozzle portion 50 is provided in an upper portion of the internal space 95 and sprays the absorbing liquid. The absorbing liquid, which is sprayed from the nozzle portion 50, comes into contact with the air supplied to the internal space 95 via the liquid storage portion 92 while moving downward due to its own weight. Due to the contact, the ammonia contained in the air is absorbed in the absorbing liquid, reaches the lower portion of the internal space 95, and is discharged through the absorbing liquid release line 45 together with the overflowed absorbing liquid described above.

Further, in the second modification example, a dilution water line 96 is provided. This dilution water line 96 is capable of sending the dilution water (for example, seawater or fresh water) with a dilution water pump (not shown) and allowing the dilution water to join the absorbing liquid release line 45. This dilution water pump (not shown) is a variable flow rate type pump, is controlled by, for example, the control devices 48, 248, 348, and 448, and allows the dilution water having a flow rate in accordance with the detection result of the release line sensor 47 to join the absorbing liquid release line 45. Here, the flow rate of the dilution water can be controlled according to the concentration of discharged ammonia that is discharged from the absorbing liquid release line 45. For example, the concentration of the discharged ammonia can be obtained by using the flow rate of the dilution water and the concentration of ammonia detected by an ammonia sensor.

The dilution water line 96 in the second modification example may be appropriately provided or may be omitted. Since it is no longer necessary to provide the pump 49 with the flow rate of the diluted portion by providing this configuration of the dilution water line 96, it becomes possible to downsize the pump 49. Furthermore, the dilution water pump (not shown) in the second modification example is not limited to the variable flow rate type and may be, for example, a type of pump capable of supplying a constant flow rate at the maximum flow rate.

Further, in the second modification example, although the release line sensor 47 provided in the absorbing liquid release line 45 as the ammonia sensor has been described as an example, an internal space sensor 97 that is provided in a space of the internal space 95 excluding the liquid storage portion 92 may be used, for example.

Further, although a case where the scrubber 244 in the second modification example includes the liquid storage portion 92 inside the scrubber casing 91 has been described, the liquid storage portion 92 may be disposed outside the scrubber casing 91. In this case, for example, an overflow pipe of the liquid storage portion 92 may be connected to the scrubber casing 91, and the gas phase of the liquid storage portion 92 and the gas phase of the scrubber casing 91 may be made to communicate with each other through a pipe or the like.

According to the second modification example, since the air sent via the duct 41 can be brought into contact with the absorbing liquid without fail, the air from which ammonia has not been sufficiently removed can be prevented from being discharged from the absorbing liquid release line 45.

### <Other Embodiments>

The embodiments of the present disclosure have been described in detail with reference to the drawings. However, the specific configuration is not limited to the embodiments of the present disclosure, and includes design changes and the like without departing from the gist of the present disclosure.

For example, in the first to third embodiments, the atmosphere release line 57 and the opening-closing damper 58 may be omitted.

In each of the above embodiments, a case where the release line sensor 47 is provided in the absorbing liquid release line 45 and the flow rate of the air flowing through the duct 41 is regulated based on the detection result of the release line sensor 47 has been described. However, when there is no possibility that the concentration of ammonia in the fluid released from the absorbing liquid release line 45 exceeds the regulation value because the concentration of ammonia in the fluid released from the absorbing liquid release line 45 is designed in advance to be sufficiently low, the release line sensor 47 may be omitted and the control based on the detection result of the release line sensor 47 may not be performed. Further, even when the release line sensor 47 is provided, the detection result of the release line sensor 47 may be used only for checking whether or not ammonia is removed by the scrubber 44.

In each of the above embodiments, the configuration in which the control devices 48, 248, 348, and 448 automatically remove the ammonia by the scrubber 44 when the determination is made that the leakage of the ammonia has occurred inside the compartment 30 has been described. However, the control devices 48, 248, 348, and 448 may be omitted, and for example, the worker may operate the exhaust fans 42 and 242 or the like by visually observing the detection result of the in-compartment sensor 46 on a display device, and then the ammonia inside the compartment 30 may be removed.

In each of the above embodiments, a case where a dedicated pump 49 is provided for supplying the absorbing liquid to the scrubber 44 via the absorbing liquid supply line 43 has been described. However, the pump 49 which supplies the absorbing liquid may also be used as another seawater or fresh water pump provided in the floating main structure 2.

Further, although the pump 49 is operated when the determination is made that the leakage of the ammonia has occurred and is in a stop state in other cases, the pump 49 may be in a constantly operating state.

In the modification example of the above embodiment, although a case where exhaust heat of the combustion equipment 8 is used has been described, the heat energy supplied from a heat source other than the combustion equipment 8 may be used.

In the second modification example of the above embodiment, although a case where the dilution water line 96 is provided has been described, for example, the dilution water line 96 of this second modification example may be provided for the first to fourth embodiments and the first modification example as appropriate.

In the first and second embodiments, although a case where each of the ventilation air supply duct 53, the ventilation exhaust fan 56, the ventilation exhaust damper 59, the ventilation exhaust damper control unit 75, the ventilation air supply damper control unit 76, and the ventilation exhaust fan control unit 77 is provided has been described, these configurations may be omitted as appropriate.

In each of the above embodiments, a case where a computer device is used as the control devices 48, 248, 348, and 448 has been described as an example. However, for example, the functional configurations of the control devices 48, 248, 348, and 448 may be implemented by hardware such as a relay circuit, or the functional configurations of the control devices 48, 248, 348, and 448 may be implemented by a combination of hardware and software.

### <Additional Notes>

The floating structure 1 described in the embodiment is ascertained as follows, for example.

(1) According to a first aspect, a floating structure 1 includes: a floating main structure 2; a compartment 30 that is provided in the floating main structure 2 and that accommodates ammonia-related equipment inside the compartment; a duct 41 that is connected to the compartment 30 and that makes an inside of the compartment 30 and an outside of the compartment 30 communicate with each other; an exhaust fan 42, 242 that discharges air at the inside of the compartment 30 to the outside of the compartment 30 via the duct 41; an absorbing liquid supply line 43 that supplies absorbing liquid capable of absorbing ammonia; an ammonia removal portion 44 that is disposed on the outside of the compartment 30 and that is capable of removing ammonia, which is contained in air discharged by the exhaust fan 42, 242 via the duct 41, by absorbing the ammonia with the absorbing liquid supplied through the absorbing liquid supply line 43; and an absorbing liquid release line 45 that releases the absorbing liquid, which has absorbed the ammonia in the ammonia removal portion 44, and the air, from which the ammonia has been removed, into water around which the floating main structure 2 floats.

Examples of the ammonia removal portion 44 include a scrubber.

As a result, the ammonia can be removed by introducing the air that contains the ammonia leaked and vaporized inside the compartment 30 to the ammonia removal portion 44 via the duct 41. Further, since the absorbing liquid that has absorbed the ammonia in the ammonia removal portion 44 is released into water via the absorbing liquid release line 45, it is possible to prevent the ammonia contained in the absorbing liquid from re-vaporizing, being released into the atmosphere, and coming into contact with the worker. Furthermore, since the absorbing liquid that has absorbed ammonia does not remain inside the floating main structure 2, the contact between the absorbing liquid that has absorbed ammonia and the worker can be prevented. Therefore, it is possible to prevent the worker from coming into contact with the ammonia without flooding the equipment inside the compartment 30.

(2) The floating structure 1 according to a second aspect is the floating structure 1 of (1), the floating structure 1 further includes an in-compartment sensor 46 that is capable of detecting ammonia contained in the air at the inside of the compartment 30.

As a result, the leakage of the ammonia inside the compartment 30 can be detected based on the detection result of the in-compartment sensor 46. As a result, it is possible to operate the exhaust fan 42 to remove the ammonia only when the leakage of the ammonia occurs inside the compartment 30, and energy saving can be achieved.

(3) The floating structure 1 according to a third aspect is the floating structure 1 of (2), the floating structure 1 further includes a release line sensor 47 that is capable of detecting ammonia contained in fluid flowing through the absorbing liquid release line 45.

As a result, for example, when the concentration of ammonia contained in the fluid flowing through the absorbing liquid release line 45 is high, the flow rate of the air, which is introduced from the compartment 30 to the scrubber 44, can be reduced to prevent the concentration of ammonia in the fluid discharged through the absorbing liquid release line 45 from exceeding a regulation value.

(4) The floating structure 1 according to a fourth aspect is the floating structure 1 of (3), in which the exhaust fan 42 is a variable speed fan that is capable of regulating an air volume.

As a result, for example, when the concentration of ammonia contained in the fluid flowing through the absorbing liquid release line 45 is high, by reducing the air volume of the exhaust fan 42 according to the concentration of ammonia, the concentration of ammonia in the fluid flowing through the absorbing liquid release line 45 can be reduced.

(5) The floating structure 1 according to a fifth aspect is the floating structure 1 of any one of (2) to (4), the floating structure 1 further includes a control device 48, 248, 348, 448 that determines whether or not leakage of the ammonia has occurred based on a detection result of the in-compartment sensor 46 and that operates the exhaust fan 42, 242 when a determination is made that the leakage of the ammonia has occurred.

As a result, the ammonia leaked inside the compartment 30 can be automatically removed by the control device 48, 248, 348, 448.

(6) The floating structure 1 according to a sixth aspect is the floating structure 1 of (5), the floating structure 1 further includes a control device 48, 248, 348, 448 that determines whether or not leakage of the ammonia has occurred based on a detection result of the in-compartment sensor 46, that operates the exhaust fan 42, 242 when a determination is made that the leakage of the ammonia has occurred, and that regulates an air volume of the exhaust fan 42, 242 based on a detection result of the release line sensor 47.

As a result, the concentration of ammonia contained in the fluid flowing through the absorbing liquid release line 45 can be automatically prevented from exceeding the regulation value.

(7) The floating structure 1 according to a seventh aspect is the floating structure 1 of (3), the floating structure 1 further includes: a circulation duct 81 that is branched and connected to the duct 41 and that returns the air flowing through the duct 41 to the compartment 30; a duct damper 82 that is provided in the duct 41 and that is capable of regulating a flow rate of the air flowing inside the duct 41; and a circulation duct damper 83 that is provided in the circulation duct 81 and that is capable of regulating a flow rate of the air flowing inside the circulation duct 81, in which the exhaust fan 242 is a constant speed fan that maintains a constant flow rate.

As a result, even when the air volume of the exhaust fan 242 cannot be regulated, the flow rate of the air flowing from the duct 41 into the inside of the scrubber 44 can be changed. Therefore, for example, when the concentration of ammonia contained in the fluid flowing through the absorbing liquid release line 45 is high, the flow rate of the air, which is introduced from the compartment 30 to the scrubber 44, can be reduced to prevent the concentration of ammonia in the fluid discharged through the absorbing liquid release line 45 from exceeding a regulation value.

(8) The floating structure 1 according to an eighth aspect is the floating structure 1 of (7), the floating structure 1 further includes a control device that controls the duct damper and the circulation duct damper based on detection results of the in-compartment sensor and the release line sensor, in which the control device sets the duct damper in a closed state and sets the circulation duct damper in an open state when a determination is made that leakage of the ammonia has not occurred based on the detection result of the in-compartment sensor, and regulates a flow rate of the air flowing into the ammonia removal portion by regulating the flow rate of the air flowing through the duct and the flow rate of the air flowing through the circulation duct by using the duct damper and the circulation duct damper based on the detection result of the release line sensor when a determination is made that leakage of the ammonia has occurred.

As a result, even when the exhaust fan 242 is a constant speed fan, the control device 248 can automatically prevent the concentration of ammonia contained in the fluid flowing through the absorbing liquid release line 45 from exceeding the regulation value.

(9) The floating structure 1 according to a ninth aspect is the floating structure 1 of any one of (1) to (8), the floating structure 1 further includes a ventilation exhaust fan 56 that releases the air at the inside of the compartment 30 to an outside of the floating main structure 2.

As a result, when the leakage of the ammonia does not occur, the ventilation inside the compartment 30 can be performed by the ventilation exhaust fan 56.

(10) The floating structure 1 according to a tenth aspect is the floating structure 1 of (1), the floating structure 1 further includes: a ventilation exhaust duct 354 that is branched and connected to the duct 41 and that discharges the air flowing through the duct 41 to an outside of the floating main structure 2; a duct damper 82 that is provided in the duct 41 and that is capable of regulating a flow rate of the air flowing inside the duct 41; and an exhaust duct damper 85 that is provided in the ventilation exhaust duct 354 and that is capable of regulating a flow rate of the air flowing inside the ventilation exhaust duct 354.

As a result, a flow path, which is configured with the duct 41 and the ventilation exhaust duct 354 and makes the inside of the compartment 30 and the outside of the ship communicate with each other, and a flow path, which is configured with the duct 41 and makes the inside of the compartment 30 and the inside of the scrubber 44 communicate with each other, can be switched and used. Further, since the exhaust fan 42 is provided in a common portion of the two flow paths that are switched and used, the compartment 30 can be ventilated or the air inside the compartment 30 can be sent to the scrubber 44 by using one exhaust fan 42. Therefore, the number of parts can be reduced as compared with a case where a ventilation fan and an ammonia removal fan are separately provided.

(11) The floating structure 1 according to an eleventh aspect is the floating structure 1 of (10), the floating structure 1 further includes an in-compartment sensor 46 that is capable of detecting ammonia contained in the air at the inside of the compartment 30.

As a result, since the leakage of the ammonia inside the compartment 30 can be detected based on the detection result of the in-compartment sensor 46, it is possible to switch to the flow path, which is configured with the duct 41 and makes the inside of the compartment 30 and the inside of the scrubber 44 communicate with each other, when the determination is made that the leakage of the ammonia has occurred. Therefore, it is possible to further prevent the worker from coming into contact with the ammonia.

(12) The floating structure 1 according to a twelfth aspect is the floating structure 1 of (11), the floating structure 1 further includes a control device 348 that controls the duct damper 82 and the exhaust duct damper 85 based on a detection result of the in-compartment sensor 46, in which the control device 348 sets the duct damper 82 in a closed state and sets the exhaust duct damper 85 in an open state when a determination is made that leakage of the ammonia has not occurred, and sets the duct damper 82 in an open state and sets the exhaust duct damper 85 in a closed state when the determination is made that the leakage of the ammonia has occurred.

As a result, the ammonia leaked inside the compartment 30 can be automatically removed.

(13) The floating structure 1 according to a thirteenth aspect is the floating structure 1 of (12), in which the exhaust fan 42 is a variable speed fan that is capable of regulating an air volume.

As a result, for example, when the concentration of ammonia contained in the fluid flowing through the absorbing liquid release line 45 is high, by reducing the air volume of the exhaust fan 42 according to the concentration of ammonia, the concentration of ammonia in the fluid flowing through the absorbing liquid release line 45 can be reduced.

(14) The floating structure 1 according to a fourteenth aspect is the floating structure 1 of (13), the floating structure 1 further includes a release line sensor 47 that is capable of detecting ammonia contained in fluid flowing through the absorbing liquid release line 45, in which the control device 348 regulates the air volume of the exhaust fan 42 based on a detection result of the release line sensor 47.

As a result, the concentration of ammonia contained in the fluid flowing through the absorbing liquid release line 45 can be automatically prevented from exceeding the regulation value.

(15) The floating structure 1 according to a fifteenth aspect is the floating structure 1 of (2), in which the ammonia removal portion 44 includes an atmosphere release line 57 that is capable of releasing the air, which has flowed into an inside of the ammonia removal portion 44 via the duct 41, to the atmosphere, and an opening-closing damper 58 that opens and closes the atmosphere release line 57.

As a result, the atmosphere release line 57 can be used instead of the ventilation exhaust duct. Therefore, the compartment 30 can be ventilated or the air at the inside of the compartment 30 can be sent to the scrubber 44 to remove the ammonia while reducing the number of parts as compared with a case where a ventilation fan and an ammonia removal fan are separately provided. Furthermore, when the leakage of the ammonia occurs, it is possible to prevent the air containing the ammonia from coming into contact with the worker.

(16) The floating structure 1 according to a sixteenth aspect is the floating structure 1 of (15), the floating structure 1 further includes a control device 448 that controls opening and closing of the opening-closing damper 58 based on the detection result of the in-compartment sensor 46.

As a result, the ammonia leaked inside the compartment 30 can be automatically removed.

(17) The floating structure 1 according to a seventeenth aspect is the floating structure 1 of (16), the floating structure 1 further includes a release line sensor 47 that is capable of detecting ammonia contained in fluid flowing through the absorbing liquid release line, in which the exhaust fan 42 is a variable speed fan that is capable of regulating an air volume, and the control device 448 regulates the air volume of the exhaust fan 42 based on a detection result of the release line sensor 47.

As a result, the concentration of ammonia contained in the fluid flowing through the absorbing liquid release line 45 can be automatically prevented from exceeding the regulation value.

(18) The floating structure 1 according to an eighteenth aspect is the floating structure 1 of any one of (1) to (17), the floating structure 1 further includes a heat exchanger 88 that is capable of heating or cooling the absorbing liquid.

As a result, since the absorption rate of ammonia can be improved by using the absorbing liquid, it is possible to reduce the energy consumed by the pump 49.

### Industrial Applicability

According to a floating structure of the present disclosure, it is possible to prevent a worker from coming into contact with ammonia without flooding equipment in a compartment.

### Reference Signs List

1 floating structure
2 floating main structure
3a bow
3b stern
4 superstructure
5A, 5B ship side
6 ship bottom
7 upper deck
8 combustion equipment
10 ammonia tank
20 pipe system
30 compartment
40, 240 ammonia removal system
41 duct
42, 242 exhaust fan
43 absorbing liquid supply line
44, 244 scrubber
45 absorbing liquid release line
46 in-compartment sensor
47 release line sensor
48, 248, 348, 448 control device
49 pump
50 nozzle portion
53 ventilation air supply duct
54, 354 ventilation exhaust duct
55 ventilation air supply damper
56 ventilation exhaust fan
57 atmosphere release line
58 opening-closing damper
59 ventilation exhaust damper
61 CPU
62 ROM
63 RAM
64 HDD
65 signal transmission-reception module
71 signal reception unit
72, 272 exhaust fan control unit
73 pump control unit
75 ventilation exhaust damper control unit
76 ventilation air supply damper control unit
77 ventilation exhaust fan control unit
78, 278, 378 command signal output unit
79 duct damper control unit
80 circulation duct damper control unit
81 circulation duct
82 duct damper
83 circulation duct damper
85 exhaust duct damper
86 exhaust duct damper control unit
87 opening-closing damper control unit
88 heat exchanger
91 scrubber casing
92 liquid storage portion
93 internal absorbing liquid supply line
93A main line
93B branch line
95 internal space
97 internal space sensor

## Claims

1. A floating structure comprising:
a floating main structure;
a compartment that is provided in the floating main structure and that accommodates ammonia-related equipment inside the compartment;
a duct that is connected to the compartment and that makes an inside of the compartment and an outside of the compartment communicate with each other;
an exhaust fan that discharges air at the inside of the compartment to the outside of the compartment via the duct;
an absorbing liquid supply line that supplies absorbing liquid capable of absorbing ammonia;
an ammonia removal portion that is disposed on the outside of the compartment and that is capable of removing ammonia, which is contained in air discharged by the exhaust fan via the duct, by absorbing the ammonia with the absorbing liquid supplied through the absorbing liquid supply line; and
an absorbing liquid release line that releases at least the absorbing liquid, which has absorbed the ammonia in the ammonia removal portion, into water around which the floating main structure floats.

2. The floating structure according to Claim 1, further comprising:
an in-compartment sensor that is capable of detecting ammonia contained in the air at the inside of the compartment.

3. The floating structure according to Claim 2, further comprising:
a release line sensor that is capable of detecting ammonia contained in fluid flowing through the absorbing liquid release line.

4. The floating structure according to Claim 3, wherein
the exhaust fan is a variable speed fan that is capable of regulating an air volume.

5. The floating structure according to any one of Claims 2 to 4, further comprising:
a control device that determines whether or not leakage of the ammonia has occurred based on a detection result of the in-compartment sensor and that operates the exhaust fan when a determination is made that the leakage of the ammonia has occurred.

6. The floating structure according to Claim 3 or 4, further comprising:
a control device that determines whether or not leakage of the ammonia has occurred based on a detection result of the in-compartment sensor, that operates the exhaust fan when a determination is made that the leakage of the ammonia has occurred, and that regulates an air volume of the exhaust fan based on a detection result of the release line sensor.

7. The floating structure according to Claim 3, further comprising:
a circulation duct that is branched and connected to the duct and that returns the air flowing through the duct to the compartment;
a duct damper that is provided in the duct and that is capable of regulating a flow rate of the air flowing inside the duct; and
a circulation duct damper that is provided in the circulation duct and that is capable of regulating a flow rate of the air flowing inside the circulation duct, wherein
the exhaust fan is a constant speed fan that maintains a constant flow rate.

8. The floating structure according to Claim 7, further comprising:
a control device that controls the duct damper and the circulation duct damper based on detection results of the in-compartment sensor and the release line sensor, wherein
when a determination is made that leakage of the ammonia has occurred based on the detection result of the in-compartment sensor, the control device regulates a flow rate of the air flowing into the ammonia removal portion by regulating the flow rate of the air flowing through the duct and the flow rate of the air flowing through the circulation duct by using the duct damper and the circulation duct damper based on the detection result of the release line sensor.

9. The floating structure according to any one of Claims 1 to 8, further comprising:
a ventilation exhaust fan that releases the air at the inside of the compartment to an outside of the floating main structure.

10. The floating structure according to Claim 1, further comprising:
a ventilation exhaust duct that is branched and connected to the duct and that discharges the air flowing through the duct to an outside of the floating main structure;
a duct damper that is provided in the duct and that is capable of regulating a flow rate of the air flowing inside the duct; and
an exhaust duct damper that is provided in the ventilation exhaust duct and that is capable of regulating a flow rate of the air flowing inside the ventilation exhaust duct.

11. The floating structure according to Claim 10, further comprising:
an in-compartment sensor that is capable of detecting ammonia contained in the air at the inside of the compartment.

12. The floating structure according to Claim 11, further comprising:
a control device that controls the duct damper and the exhaust duct damper based on a detection result of the in-compartment sensor, wherein
the control device
sets the duct damper in a closed state and sets the exhaust duct damper in an open state when a determination is made that leakage of the ammonia has not occurred, and
sets the duct damper in an open state and sets the exhaust duct damper in a closed state when the determination is made that the leakage of the ammonia has occurred.

13. The floating structure according to Claim 12, wherein
the exhaust fan is a variable speed fan that is capable of regulating an air volume.

14. The floating structure according to Claim 13, further comprising:
a release line sensor that is capable of detecting ammonia contained in fluid flowing through the absorbing liquid release line, wherein
the control device regulates the air volume of the exhaust fan based on a detection result of the release line sensor.

15. The floating structure according to Claim 2, wherein the ammonia removal portion includes
an atmosphere release line that is capable of releasing the air, which has flowed into an inside of the ammonia removal portion via the duct, to the atmosphere, and
an opening-closing damper that opens and closes the atmosphere release line.

16. The floating structure according to Claim 15, further comprising:
a control device that controls opening and closing of the opening-closing damper.

17. The floating structure according to Claim 16, further comprising:
a release line sensor that is capable of detecting ammonia contained in fluid flowing through the absorbing liquid release line, wherein
the exhaust fan is a variable speed fan that is capable of regulating an air volume, and
the control device regulates the air volume of the exhaust fan based on a detection result of the release line sensor.

18. The floating structure according to any one of Claims 1 to 17, further comprising:
a heat exchanger that is capable of heating or cooling the absorbing liquid.
